# EUROPEAN PATENT SPECIFICATION

(11) **EP 2 067 618 B1**
(45) Date of publication and mention of the grant of the patent: **11.01.2012**
(21) Application number: 07828885.9
(22) Date of filing: 25.09.2007
(51) Int. Cl.: B32B 27/32, B32B 5/18, C08J 9/26, H01M 2/16

(54) **MULTILAYER POROUS FILM AND SEPARATOR FOR NONAQUEOUS ELECTROLYTE SECONDARY BATTERY**
MEHRLAGIGE PORÖSE FOLIE UND SEPARATOR FÜR SEKUNDÄRBATTERIE MIT NICHT WÄSSRIGEM ELEKTROLYTEN
FILM POREUX À COUCHES MULTIPLES ET SÉPARATEUR POUR ACCUMULATEUR SECONDAIRE À ÉLECTROLYTE NON AQUEUX

(30) Priority: 26.09.2006 JP 2006260254
(43) Date of publication of application: 10.06.2009
(73) Proprietor: Sumitomo Chemical Company, Limited, Tokyo 104-8260 (JP)
(72) Inventor: TAKATA, Atsuhiro, Niihama-shi, Ehime 792-0022 (JP); KURODA, Ryuma, Komatsu-shi, Ishikawa (JP); KUMAMOTO, Shin-ichi, Ichihara-shi, Chiba 299-0125 (JP)
(74) Representative: Hart-Davis, Jason
(86) International application number: PCT/JP2007/069144
(87) International publication number: WO 2008/044513

(56) References cited:
- EP-A2- 0 683 196
- WO-A1-93/12920
- WO-A1-2005/080487
- JP-A- 07 309 965
- JP-A- 10 006 453
- JP-A- 10 324 758
- US-A- 5 281 491
- US-A1- 2002 136 945
- DATABASE WPI Week 199908 Thomson Scientific, London, GB; AN 1999-090135 XP002570005 & JP 10 324758 A (SUMITOMO CHEM CO LTD) 8 December 1998 (1998-12-08)

## Description

### TECHNICAL FIELD

The present invention relates to a laminated porous film, and a separator for a nonaqueous electrolyte secondary battery made from the laminated porous film.

### BACKGROUND ART

A laminated porous film is used as a separator in a nonaqueous electrolyte secondary battery such as a lithium secondary battery. In the separator for a nonaqueous electrolyte secondary battery, it is important to prevent excess flow of a current (shutdown) by cut-off of the current when an abnormal current flows in the battery due to short circuit or the like between a cathode and an anode. It is required for the separator to cause shutdown at a temperature as low as possible when the temperature exceeds a usual working temperature, and to maintain the shutdown state without breaking even when the temperature in the battery is raised to a certain degree.

There is proposed, as a laminated porous film used as a separator, a laminated porous film obtained by drawing a laminated film including three or more layers in which polypropylene and polyethylene are alternately laminated to make the film porous (refer to Japanese Unexamined Patent Publication No. 7-307146).

### DISCLOSURE OF THE INVENTION

However, a conventional laminated porous film is insufficient from the viewpoint of shutdown at low temperature and a porous film, which can cause shutdown at a lower temperature, is required. An object of the present invention is to provide a laminated porous film which can cause shutdown at low temperature when used as a separator for a battery and the temperature exceeds a usual working temperature, and also can maintain the shutdown state without breaking even when the temperature in the battery is raised to a certain degree.

The present inventors have intensively studied, thus leading to the present invention namely a laminated porous film according to claim 1. The present invention provides the following aspects.
<1> A laminated porous film formed by laminating a heat-resistant resin layer on a porous film made from a polyolefin-based resin containing an ethylene-α-olefin copolymer including a structural unit derived from ethylene and a structural unit derived from one or more kinds of monomers selected from α-olefins having 4 to 10 carbon atoms, wherein a shutdown temperature is 125°C or lower and a thermal film breakage temperature is 155°c or higher.
<2> The laminated porous film according to the above <1>, wherein an intrinsic viscosity [η] of the ethylene-α-olefin copolymer is 9.1 dl/g or more and 15.0 dl/g or less and a short chain branch number (SCB) per 1,000 carbon atoms in the copolymer is 4.8 or more and 20.0 or less.
<3> The laminated porous film according to the above <1>, wherein the shutdown temperature is 120°C or lower.
<4> The laminated porous film according to the above <3>, wherein the intrinsic viscosity [η] of the ethylene-α-olefin copolymer is 9.1 dl/g or more and 15.0 dl/g or less and the short chain branch number (SCB) per 1,000 carbon atoms in the copolymer is 4.8 or more and 20.0 or less, and also a cold xylene soluble portion (CXS) contained in the ethylene-α-olefin copolymer is 1.2 or more and 6.0 or less.
<5> The laminated porous film according to any one of the above <1> to <4>, wherein the polyolefin-based resin is a polyolefin-based resin containing 100 parts by weight of the ethylene-α-olefin copolymer and 5 to 200 parts by weight of a low molecular weight polyolefin having a weight average molecular weight of 10,000 or less.
<6> The laminated porous film according tc any one of the above <1> to <5>, wherein a heat-resistant resin constituting the heat-resistant resin layer is selected from the group consisting of polypropylene, poly-4-methylpentene-1, a polymer containing a nitrogen atom and a cyclic olefin-based polymer.
<7> A separator for a nonaqueous electrolyte secondary battery, including the laminated porous film according to any one of the above <1> to <6>.
<8> A nonaqueous electrolyte secondary battery including the separator for a nonaqueous electrolyte secondary battery according to the above <7>.

The laminated porous film of the present invention can cause shutdown at low temperature when used as a separator for a battery and the temperature exceeds a usual working temperature and can maintain the shutdown state without breaking even when the temperature in the battery is raised to a certain degree, that is, it is excellent in thermal film breakage resistance, and therefore the present invention is industrially very useful.

### BRIEF DESCRIPTION OF THE DRAWING

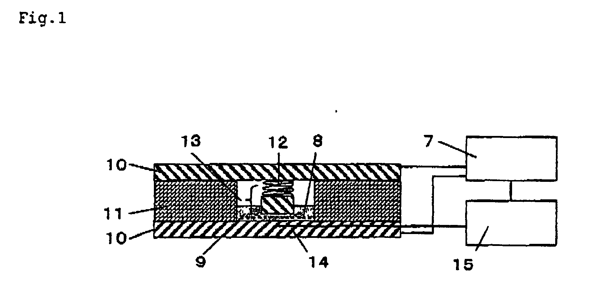

Fig. 1 is a schematic view showing an apparatus for measurement cf internal resistance.

### DESCRIPTION OF REFERENCE NUMERALS

- 7: Impedance analyzer
- 8: Separator
- 9: Electrolytic solution
- 10: SUS plate
- 11: Spacer made of Teflon^{®}
- 12: Spring
- 13: Electrode
- 14: Thermocouple
- 15: Data processor

### BEST MODE FOR CARRYING OUT THE INVENTION

The present invention provides a laminated porous film formed by laminating a heat-resistant resin layer on a porous film made from a polyolefin-based resin containing an ethylene-α-olefin copolymer including a structural unit derived from ethylene and a structural unit derived from one or more kinds of monomers selected from α-olefins having 4 to 10 carbon atoms, wherein a shutdown temperature is 125°C or lower and a thermal film breakage temperature is 155°C or higher. In the present invention, a shutdown temperature means a temperature at which an impedance at 1 kHz reaches 1,000 Ω when an internal resistance of the laminated porous film is measured, and a thermal film breakage temperature means a temperature at which the laminated porous film is broken and the internal resistance begins to lower upon measurement when the temperature is further increased after shutdown. In the laminated porous film of the present invention, a lower limit of the shutdown temperature is usually 100°C.

In order to preferably use the laminated porous film of the present invention as a separator for a battery, a puncture strength of the laminated porous film is preferably 2,452N (250 gf) or more.

In order to obtain a laminated porous film having a shutdown temperature of 125°C or lower and a puncture strength of 2,452N (250 gf) or more, it is preferred that an intrinsic viscosity [n] of the ethylene-α-olefin copolymer including a structural unit derived from ethylene and a structural unit derived from one or more kinds of monomers selected from α-olefins having 4 to 10 carbon atoms, which are contained in the polyolefin-based resin constituting the porous film, be 9.1 dl/g or more and 15.0 dl/g or less and a short chain branch number (SCB) per 1,000 carbon atoms in the copolymer be 4.8 or more and 20.0 or less.

The intrinsic viscosity in the present invention is a value measured in tetrahydronaphthalene (trade name: Tetralin) at 135°C. In the present invention, the short chain branch number (SCB) per 1,000 carbon atoms in the ethylene-α-olefin copolymer is a value which is obtained by a calibration curve determined from characteristic absorptions of ethylene and an α-olefin using an infrared spectrophotometer based on the method described in "Polymer Analysis Handbook" (The Japan Society for Analytical Chemistry, edited by Research Committee of Polymer Analysis), pp. 590-594, and is then expressed as a short chain branch number (SCB) per 1,000 carbon atoms.

In the laminated porous film of the present invention, the shutdown temperature is preferably 120°C or lower. It is preferred that the intrinsic viscosity [η] of the ethylene-α-olefin copolymer including a structural unit derived from ethylene and a structural unit derived from one or more kinds of monomers selected from α-olefins having 4 to 10 carbon atoms, which are contained in the polyolefin-based resin constituting the porous film of the laminated porous film, be 9.1 dl/g or more and 15.0 dl/g or less and the short chain branch number (SCB) per 1,000 carbon atoms in the copolymer be 4.8 or more and 20.0 or less, and also a cold xylene soluble portion (CXS) contained in the ethylene-α-olefin copolymer be 1.2 or more and 6.0 or less. A CXS of the ethylene-α-olefin copolymer is more preferably 1.43 or more and 5.60 or less. The cold xylene soluble portion in the present invention means a percentage of the weight of a component which is soluble when 5 g of an ethylene-α-olefin copolymer is added to 1,000 mL of xylene at 25°C to the initial weight (namely, 5 g) of the ethylene-α-olefin copolymer.

The ethylene-α-olefin copolymer used in the present invention is obtained by copolymerizing ethylene with one or more kinds of monomers selected from α-olefins having 4 to 10 carbon atoms in the presence of a catalyst for polymerization obtained by contacting a solid catalyst component (α) containing a titanium atom, a magnesium atom, a halogen atom and an ester compound and having a specific surface area as measured by the BET method of 80 m²/g or less with an organoaluminum compound (β). Examples of the α-olefins having 4 to 10 carbon atoms include 1-butene, 1-pentene, 4-methyl-1-pentene, 1-hexene, 1-octene, 1-nonene and 1-decene. The α-olefin of the ethylene-α-olefin copolymer in the present invention is preferably 1-butene or 1-hexene.

The specific surface area as measured by the BET method of the solid catalyst component (α) is 80 m²/g or less, preferably from 0.05 to 50 m²/g, and more preferably from 0.1 to 30 m²/g. The specific surface area can be decreased by containing a sufficient amount of an ester compound in the solid catalyst component (α). The content of the ester compound in the solid catalyst component (α) is preferably from 15 to 50% by weight, more preferably from 20 to 40% by weight, and still more preferably from 22 to 35% by weight, based on 100% by weight of the entire dried solid catalyst component.

Examples of the ester compound in the solid catalyst component (α) include mono or polyhydric carboxylate esters, for example, a saturated aliphatic carboxylate ester, an unsaturated aliphatic carboxylate ester, an alicyclic carboxylate ester and an aromatic carboxylate ester. Specific examples thereof include methyl acetate, ethyl acetate, phenyl acetate, methyl propionate, ethyl propionate, ethyl butyrate, ethyl valerate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methylethyl phthalate, diethyl phthalate, di-n-propyl phthalate, diisopropyl phthalate, di-n-butyl phthalate, diisobutyl phthalate, dipentyl phthalate, di-n-hexyl phthalate, diheptyl phthalate, di-n-octyl phthalate, di(2-ethylhexyl) phthalate, diisodecyl phthalate, dicyclohexyl phthalate and diphenyl phthalate. In view of polymerization activity, the ester compound is preferably dialkyl phthalate, and is more preferably dialkyl phthalate in which the total number of carbon atoms of two alkyl groups bonded to each ester bond is 9 or more. As described hereinafter, the ester compound is mainly an ester compound used in the preparation process of the solid catalyst component (α), or an ester compound produced in the preparation process of the solid catalyst component (α).

The content of the titanium atom in the solid catalyst component (α) is preferably from 0.6 to 1.6% by weight, and more preferably from 0.8 to 1.4% by weight, based on 100% by weight of the dried solid catalyst component (α).

The solid catalyst component (α) is obtained by the preparation process of a solid catalyst component described in Japanese Unexamined Patent Publication (Kokai) No. 11-322833 in the presence of an ester compound or a compound capable of producing an ester compound in the reaction system.

For example, any one of the following preparation methods (1) to (5) is exemplified.
(1) A method of contacting a halogenated magnesium compound, a titanium compound and an ester compound with each other.
(2) A method of contacting a solid component, which is obtained by contacting an alcohol solution of a halogenated magnesium compound with a titanium compound, with an ester compound.
(3) A method of contacting a solid component, which is obtained by contacting a solution of a halogenated magnesium compound and a titanium compound with a precipitating agent, with a halogenated compound and an ester compound.
(4) A method of contacting a dialkoxymagnesium compound, a halogenated titanium compound and an ester compound with each other.
(5) A method of contacting a solid component containing a magnesium atom, a titanium atom and a hydrocarbyloxy group, a halogenated compound and an ester compound with each other.

Among these methods, the method (5) is preferred and a method of contacting a solid component (a) containing a magnesium atom, a titanium atom and a hydrocarbyloxy group, a halogenated compound (b) and a phthalic acid derivative (c) with each other is preferred. Further description will be made below.

### (a) Solid Component

The solid component (a) used in the present invention is a solid component obtained by reducing a titanium compound (ii) represented by the general formula [I] shown below with an organomagnesium compound (iii) in the presence of an organosilicon compound (i) having an Si-O bond. When an ester compound (iv) is added as an optional component, polymerization activity may occasionally be further improved.

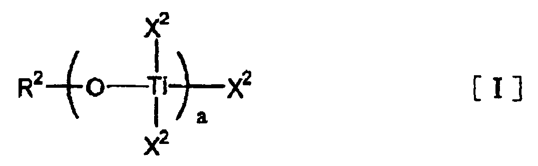

In the general formula [I], a represents a number of 1 to 20, R² represents a hydrocarbon group having 1 to 20 carbon atoms, X²s each represent a halogen atom or a hydrocarbonoxy group having 1 to 20 carbon atoms, and all X²s may be the same or different.

Examples of the organosilicon compound (i) having an Si-O bond include compounds represented by the following general formulas:

Si (OR¹⁰)ₜR¹¹₄₋ₜ,

R¹²(R¹³₂SiO)ᵤSiR¹⁴₃, and

(R¹⁵₂SiO)ᵥ.

In the above general formulas, R¹⁰ represents a hydrocarbon group having 1 to 20 carbon atoms, R¹¹, R¹², R¹³, R¹⁴ and R¹⁵ each independently represent a hydrocarbon group having 1 to 20 carbon atoms or a hydrogen atom, t represents an integer satisfying a relation: 0 < t ≤ 4, u represents an integer of 1 to 1,000, and v represents an integer of 2 to 1,000.

Examples of the organosilicon compound (i) include tetramethoxysilane, dimethyldimethoxysilane, tetraethoxysilane, triethoxyethylsilane, diethoxydiethylsilane, ethoxytriethylsilane, tetraisopropoxysilane, diisopropoxy-diisopropylsilane, tetrapropoxysilane, dipropoxydipropylsilane, tetrabutoxysilane, dibutoxydibutylsilane, dicyclopentoxydiethylsilane, diethoxydiphenylsilane, cyclohexyloxytrimethylsilane, phenoxytrimethylsilane, tetraphenoxysilane, triethoxyphenylsilane, hexamethyldisilohexane, hexaethyldisilohexane, hexapropyldisiloxane, octaethyltrisiloxane, dimethylpolysiloxane, diphenylpolysiloxane, methylhydropolysiloxane and phenylhydropolysiloxane. Among these organosilicon compounds (i), an alkoxysilane compound represented by the general formula Si(OR¹⁰)ₜR¹¹₄₋ₜ is preferred. In that case, t is preferably a number satisfying a relation: 1 ≤ t ≤ 4. Tetraalkoxysilane in which t = 4 is particularly preferred and tetraethoxysilane is most preferred.

The titanium compound (ii) is a titanium compound represented by the general formula [I] shown below: 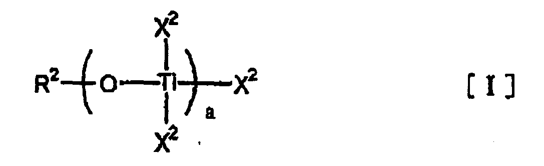 wherein a represents a number of 1 to 20, R² represents a hydrocarbon group having 1 to 20 carbon atoms, X²s each represent a halogen atom or a hydrocarbonoxy group having 1 to 20 carbon atoms, and all X²s may be the same or different.

R² is a hydrocarbon group having 1 to 20 carbon atoms. Examples of R² include alkyl groups such as a methyl group, an ethyl group, a propyl group, an isopropyl group, a butyl group, an isobutyl group, an amyl group, an isoamyl group, a hexyl group, a heptyl group, an octyl group, a decyl group and a dodecyl group; aryl groups such as a phenyl group, a cresyl group, a xylyl group and a naphthyl group; cycloalkyl groups such as a cyclohexyl group and a cyclopentyl group; allyl groups such as a propenyl group; and aralkyl groups such as a benzyl group. Among these hydrocarbon groups, an alkyl group having 2 to 18 carbon atoms or an aryl group having 6 to 18 carbon atoms is preferred. A linear alkyl group having 2 to 18 carbon atoms is more preferred.

X²s each represent a halogen atom or a hydrocarbonoxy group having 1 to 20 carbon atoms. Examples of the halogen atom in X² include a chlorine atom, a bromine atom and an iodine atom. A chlorine atom is particularly preferred. Similar to R², a hydrocarbonoxy group having 1 to 20 carbon atoms in X² is a hydrocarbonoxy group having a hydrocarbon group having 1 to 20 carbon atoms. X² is particularly preferably an alkoxy group having a linear alkyl group having 2 to 18 carbon atoms.

a in the titanium compound (ii) represented by the general formula [I] is a number of 1 to 20, and preferably a number satisfying a relation: 1 ≤ a ≤ 5.

Examples of the titanium compound (ii) include tetramethoxytitanium, tetraethoxytitanium, tetra-n-propoxytitanium, tetra-iso-propoxytitanium, tetra-n-butoxytitanium, tetra-iso-butoxytitanium, n-butoxytitanium trichloride, di-n-butoxytitanium dichloride, tri-n-butoxytitanium chloride, di-n-tetraisopropyl polytitanate (a mixture in which a = 2 to 10), tetra-n-butyl polytitanate (a mixture in which a = 2 to 10), tetra-n-hexyl polytitanate (a mixture in which a = 2 to 10) and tetra-n-octyl polytitanate (a mixture in which a = 2 to 10). A condensate of tetraalkoxytitanium obtained by reacting tetraalkoxytitanium with a small amount of water can also be exemplified.

The titanium compound (ii) is preferably a titanium compound of the general formula [I] in which a is 1, 2 or 4. The titanium compound is particularly preferably tetra-n-butoxytitanium, a tetra-n-butyltitanium dimer or a tetra-n-butyltitanium tetramer. The titanium compound (ii) may be used alone or can also be used in a state of a mixture of plural kinds of them.

The organomagnesium compound (iii) is an optional type organomagnesium compound having a magnesium-carbon bond. In particular, a Grignard compound represented by the general formula R¹⁶MgX⁵ (wherein Mg represents a magnesium atom, R¹⁶ represents a hydrocarbon group having 1 to 20 carbon atoms and X⁵ represents a halogen atom) or dihydrocarbylmagnesium represented by the general formula R¹⁷R¹⁸Mg (wherein Mg represents a magnesium atom, and R¹⁷ and R¹⁸ each represents a hydrocarbon group having 1 to 20 carbon atoms) is preferably used. R¹⁷ and R¹⁸ may be the same or different. Examples of R¹⁶ to R¹⁸ include alkyl groups, aryl groups, aralkyl groups and alkenyl groups having 1 to 20 carbon atoms such as a methyl group, an ethyl group, a propyl group, an isopropyl group, a butyl group, a sec-butyl group, a tert-butyl group, an isoamyl group, a hexyl group, an octyl group, a 2-ethylhexyl group, a phenyl group and a benzyl group. It is particularly preferred to use an ether solution of a Grignard compound represented by R¹⁶MgX⁵ in view of polymerization activity and stereoregularity.

The organomagnesium compound (iii) can also be used as a complex with an other organometal compound so as to be made soluble in a hydrocarbon solvent. Specific examples of the organometal compound include a compound of lithium, beryllium, aluminum or zinc.

Examples of the ester compound (iv) as an optional component include mono or polyhydric carboxylate esters, for example, a saturated aliphatic carboxylate ester, an unsaturated aliphatic carboxylate ester, an alicyclic carboxylate ester and an aromatic carboxylate ester. Specific examples thereof include methyl acetate, ethyl acetate, phenyl acetate, methyl propionate, ethyl propionate, ethyl butyrate, ethyl valerate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methylethyl phthalate, diethyl phthalate, di-n-propyl phthalate, diisopropyl phthalate, di-n-butyl phthalate, diisobutyl phthalate, dipentyl phthalate, di-n-hexyl phthalate, diheptyl phthalate, di-n-octyl phthalate, di(2-ethylhexyl) phthalate, diisodecyl phthalate, dicyclohexyl phthalate and diphenyl phthalate. Among these ester compounds, unsaturated aliphatic carboxylate esters such as a methacrylate ester and a maleate ester, or aromatic carboxylate esters such as a phthalate ester are preferred, and dialkyl phthalate is particularly preferably used.

The solid component (a) is obtained by reducing a titanium compound (ii) with an organomagnesium compound (iii) in the presence of an organosilicon compound (i) or an organosilicon compound (i) and an ester compound (iv). Specifically, a method of pouring an organomagnesium compound (iii) in a mixture of an organosilicon compound (i), a titanium compound (ii) and, as necessary, an ester compound (iv).

It is preferred that the titanium compound (ii), the organosilicon compound (i) and the ester compound (iv) are used by dissolving them in a suitable solvent or in the form of a slurry. Examples of the solvent include aliphatic hydrocarbons such as hexane, heptane, octane and decane; aromatic hydrocarbons such as toluene and xylene; alicyclic hydrocarbons such as cyclohexane, methylcyclohexane and decalin; and ether compounds such as diethylether, dibutylether, diisoamylether and tetrahydrofuran.

The reductive reaction temperature is usually within a range from -50 to 70°C, preferably from -30 to 50°C, and particularly preferably from -25 to 35°C.

The charge time of organomagnesium (iii) is not particularly limited and is usually from about 30 minutes to 10 hours. Although the reductive reaction proceeds as the organomagnesium (iii) is charged, a post-reaction may also be carried out at a temperature of 20 to 120°C after charging.

Upon the reductive reaction, in the presence of a porous carrier such as an inorganic oxide or an organic polymer, it is also possible to impregnate the porous carrier with the solid component. The porous carrier to be used may be known one. Specific examples thereof include porous inorganic oxides typified by SiO₂, Al₂O₃, MgO, TiO₂ and ZrO₂; and organic porous polymers such as polystyrene, a styrene-divinylbenzene copolymer, a styrene-ethylene glycol-dimethyl methacrylate copolymer, polymethyl acrylate, polyethyl acrylate, a methyl acrylate-divinylbenzene copolymer, polymethyl methacrylate, a methyl methacrylate-divinylbenzene copolymer, polyacrylonitrile, an acrylonitrile-divinylbenzene copolymer, polyvinyl chloride, polyethylene and polypropylene. Among these porous carries, an organic porous polymer is preferably used, and a styrene-divinylbenzene copolymer or an acrylonitrile-divinylbenzene copolymer is particularly preferably used.

In view of effective immobilization of a catalyst component, the catalyst is preferably one in which the pore volume at a pore radius of 20 nm to 200 nm in the porous carrier is preferably 0.3 cm³/g or more, and more preferably 0.4 cm³/g or more, and the pore volume within such a range of the pore radius is 35% or more, and more preferably 40% or more of the pore volume at a pore radius of 3.5 nm to 7,500 nm. It is not preferred that a sufficient volume of the porous carrier does not exist within a range from 20 nm to 200 nm since the catalyst component may not be effectively immobilized.

The used amount of the organosilicon compound (i) is usually within a range from 1 to 500, preferably from 1.5 to 300, and particularly preferably from 3 to 100, in terms of a ratio Si/Ti of the number of silicon atoms to the total number of titanium atoms in the titanium compound (ii).

The used amount of the organomagnesium compound (iii) is usually within a range from 0.1 to 10, preferably from 0.2 to 5.0, and particularly preferably from 0.5 to 2.0, in terms of a ratio (Ti + Si)/Mg of the total number of titanium atoms and silicon atoms to the number of magnesium atoms.

The amounts of the titanium compound (ii), the organosilicon compound (i) and the organomagnesium compound (iii) are determined so that a value of a molar ratio Mg/Ti in the solid catalyst component is usually from 1 to 51, preferably from 2 to 31, and particularly preferably from 4 to 26.

The used amount of the ester compound (iv) as an optional component is usually within a range from 0.05 to 100, preferably from 0.1 to 60, and particularly preferably from 0.2 to 30, in terms of a molar ratio ester compound/Ti of an ester compound to titanium atoms of the titanium compound (ii).

The solid component obtained in the reductive reaction is usually subjected to solid-liquid separation and then washed several times with an inert hydrocarbon solvent such as hexane, heptane or toluene. The solid component (a) thus obtained contains a trivalent titanium atom, a magnesium atom and a hydrocarbyloxy group and usually exhibits an amorphous property or very weak crystallinity. In view of polymerization activity and stereoregularity, an amorphous structure is particularly preferred.

### (b) Halogenated Compound

The halogenated compound is preferably a compound in which a hydrocarbonoxy group in a solid component (a) can be substituted with a halogen atom. The halogenated compound is more preferably a halogen compound of a Group 4 element, a halogen compound of a Group 13 element or a halogen compound of a Group 14 element of the Periodic Table, and more preferably a halogen compound (b1) of a Group 4 element or a halogen compound (b2) of a Group 14 element.

The halogen compound (b1) of a Group 4 element is a halogen compound represented by the general formula M¹(OR⁹)_{b}X⁴_{4-b} (wherein M¹ represents a Group 4 atom, R⁹ represents a hydrocarbon group having 1 to 20 carbon atoms, X⁴ represents a halogen atom, and b represents a number satisfying a relation: 0 ≤ b < 4). Examples of M¹ include a titanium atom, a zirconium atom and a hafnium atom, and M¹ is preferably a titanium atom. Examples of R⁹ include alkyl groups such as a methyl group, an ethyl group, a propyl group, an isopropyl group, a butyl group, an isobutyl group, a tert-butyl group, an amyl group, an isoamyl group, a tert-amyl group, a hexyl group, a heptyl group, an octyl group, a decyl group and a dodecyl group; aryl groups such as a phenyl group, a cresyl group, a xylyl group and a naphthyl group; allyl groups such as a propenyl group; and aralkyl groups such as a benzyl group. Among these groups, an alkyl group having 2 to 18 carbon atoms or an aryl group having 6 to 18 carbon atoms is preferred. A linear alkyl group having 2 to 18 carbon atoms is particularly preferred. It is also possible to use a halogen compound of a Group 4 element having two or more different OR⁹ groups.

Examples of the halogen atom represented by X⁴ include a chlorine atom, a bromine atom and an iodine atom. Among these atoms, a chlorine atom is particularly preferred.

b of the halogen compound of a Group 4 element represented by the general formula M¹(OR⁹)_{b}X⁴_{4-b} is a number satisfying a relation: 0 ≤ b < 4, preferably a number satisfying a relation: 0 ≤ b ≤ 2, and particularly preferably b = 0. Examples of the halogen compound represented by the general formula M¹(OR⁹)_{b}X⁴_{4-b} include titanium tetrahalides such as titanium tetrachloride, titanium tetrabromide and titanium tetraiodide; alkoxytitanium trihalides such as methoxytitanium trichloride, ethoxytitanium trichloride, butoxytitanium trichloride, phenoxytitanium trichloride and ethoxytitanium tribromide; and dialkoxytitanium dihalides such as dimethoxytitanium dichloride, diethoxytitanium dichloride, dibutoxytitanium dichloride, diphenoxytitanium dichloride and dietoxytitanium dibromide, and also include zirconium compounds and hafnium compounds corresponding thereto. Titanium tetrachloride is most preferred.

The halogen compound of a Group 13 element or a halogen compound (b2) of a Group 14 element of the Periodic Table is preferably a compound represented by the general formula M²R¹_{m-c}X⁸_{c} (wherein M² represents a Group 13 or Group 14 atom, R¹ represents a hydrocarbon group having 1 to 20 carbon atoms, X⁸ represents a halogen atom, m represents a number corresponding to an atomic value of M², and c represents a number satisfying a relation: 0 < c ≤ m). As used herein, examples of the Group 13 atom include a boron atom, an aluminum atom, a gallium atom, an indium atom and a thallium atom, preferably a boron atom or an aluminum atom, and more preferably an aluminum atom. Examples of the Group 14 atom include a carbon atom, a silicon atom, a germanium atom, a tin atom and a lead atom, preferably a silicon atom, a germanium atom or a tin atom, and more preferably a silicon atom or a tin atom.

m is a number corresponding to an atomic value of M² and, for example, when M² is a silicon atom, m = 4.

c is a number satisfying a relation: 0 < c ≤ m and, when M² is a silicon atom, c is preferably 3 or 4.

Examples of the halogen atom represented by X⁸ include a fluorine atom, a chlorine atom, a bromine atom and an iodine atom, and preferably a chlorine atom.

Examples of R¹ include alkyl groups such as a methyl group, an ethyl group, a normal propyl group, an isopropyl group, a normal butyl group, an isobutyl group, an amyl group, an isoamyl group, a hexyl group, a heptyl group, an octyl group, a decyl group and a dodecyl group; aryl groups such as a phenyl group, a tolyl group, a cresyl group, a xylyl group and a naphthyl group; cycloalkyl groups such as a cyclohexyl group and a cyclopentyl group; alkenyl groups such as a propenyl group; and aralkyl groups such as a benzyl group. Among these groups, an alkyl group or an aryl group is preferred, and a methyl group, an ethyl group, a normal propyl group, a phenyl group or a para-tolyl group is particularly preferred.

Examples of the halogen compound of a Group 13 element include trichloroborane, methyldichloroborane, ethyldichloroborane, phenyldichloroborane, cyclohexyldichloroborane, dimethylchloroborane, methylethylchloroborane, trichloroaluminum, methyldichloroaluminum, ethyldichloroaluminum, phenyldichloroaluminum, cyclohexyldichloroaluminum, dimethylchloroaluminum, diethylchloroaluminum, methylethylchloroaluminum, ethylaluminum sesquichloride, gallium chloride, gallium dichloride, trichlorogallium, methyldichlorogallium, ethyldichlorogallium, phenyldichlorogallium, cyclohexyldichlorogallium, dimethylchlorogallium, methylethylchlorogallium, indium chloride, indium trichloride, methylindium dichloride, phenylindium dichloride, dimethylindium chloride, thallium chloride, thallium trichloride, methylthallium dichloride, phenylthallium dichloride and dimethylthallium chloride, and also include compounds in which "chloro" of these compounds is substituted with "fluoro", "bromo" or "iodo",

Examples of the halogen compound (b2) of a Group 14 element include tetrachloromethane, trichloromethane, dichloromethane, monochloromethane, 1,1,1-trichloroethane, 1,1-dichloroethane, 1,2-dichloroethane, 1,1,2,2-tetrachloroethane, tetrachlorosilane, trichlorosilane, methyltrichlorosilane, ethyltrichlorosilane, normal propyltrichlorosilane, normal butyltrichlorosilane, phenyltrichlorosilane, benzyltrichlorosilane, paratolyltrichlorosilane, cyclohexyltrichlorosilane, dichlorosilane, methyldichlorosilane, ethyldichlorosilane, dimethyldichlorosilane, diphenyldichlorosilane, methylethyldichlorosilane, monochlorosilane, trimethylchlorosilane, triphenylchlorosilane, tetrachlorogermane, trichlorogermane, methyltrichlorogermane, ethyltrichlorogermane, phenyltrichlorogermane, dichlorogermane, dimethyldichlorogermane, diethyldichlorogermane, diphenyldichlorogermane, monochlorogermane, trimethylchlorogermane, triethylchlorogermane, trinormalbutylchlorogermane, tetrachlorotin, methyltrichlorotin, normal butyltrichlorotin, dimethyldichlorotin, dinormal butyldichlorotin, diisobutyldichlorotin, diphenyldichlorotin, divinyldichlorotin, methyltrichlorotin, phenyltrichlorotin, dichlorolead, methylchlorolead and phenylchlorolead, and also include compounds in which "chloro" of these compounds is substituted with "fluoro", "bromo" or "iodo".

In view of polymerization activity, titanium tetrachloride, methyldichloroaluminum, ethyldichloroaluminum, tetrachlorosilane, phenyltrichlorosilane, methyltrichlorosilane, ethyltrichlorosilane, normal propyltrichlorosilane or tetrachlorotin is particularly preferred as the halogenated compound (b).

The halogenated compound (b) selected from the above compounds may be used alone, or plural kinds of them may be simultaneously or sequentially.

### (c) Phthalic Acid Derivative

Examples of the phthalic acid derivative (c) include compounds represented by the general formula shown below: 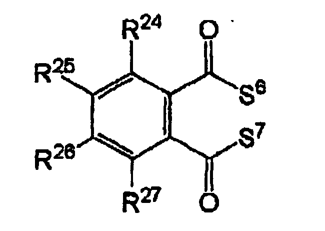 wherein R²⁴ to R²⁷ each independently represent a hydrogen atom or a hydrocarbon group, S⁶ and S⁷ each independently represent a halogen atom, or a substituent formed by optional combination of plural atoms among a hydrogen atom, a carbon atoms, an oxygen atom and a halogen atom.

R²⁴ to R²⁷ are preferably hydrogen atoms or a hydrocarbon groups having 1 to 10 carbon atoms and optionally combinations of R²⁴ to R²⁷ may be bonded with each other to form a ring structure. Preferably, S⁶ and S⁷ each independently represent a chlorine atom, a hydroxyl group or an alkoxy group having 1 to 20 carbon atoms.

Specific examples of the phthalic acid derivative (c) include phthalic acid, monoethyl phthalate, dimethyl phthalate, methylethyl phthalate, diethyl phthalate, dinormal propyl phthalate, diisopropyl phthalate, dinormal butyl phthalate, diisobutyl phthalate, dipentyl phthalate, dinormal hexyl phthalate, dinormal heptyl phthalate, diisoheptyl phthalate, dinormal octyl phthalate, di(2-ethylhexyl) phthalate, dinormal decyl phthalate, diisodecyl phthalate, dicyclohexyl phthalate, diphenyl phthalate, phthalic acid dichloride, 3-methyldiethyl phthalate, 4-methyldiethyl phthalate, 3,4-dimethyldiethyl phthalate, dinormal butyl 3-methylphthalate, dinormal butyl 4-methylphthalate, dinormal butyl 3,4-dimethylphthalate, 3-methyldiisobutyl phthalate, 4-methyldiisobutyl phthalate, 3,4-dimethyldiisobutyl phthalate, 3-methyl di(2-ethylhexyl)phthalate, 4-methyl di(2-ethylhexyl)phthalate, 3,4-dimethyl di(2-ethylhexyl)phthalate, 3-methylphthalic acid dichloride, 4-methylphthalic acid dichloride, 3,4-dimethylphthalic acid dichloride, 3-ethyl di(2-ethylhexyl)phthalate, 4-ethyl di(2-ethylhexyl)phthalate and 3,4-diethyl di(2-ethylhexyl)phthalate. Among these phthalic acid derivatives, diethyl phthalate, dinormal butyl phthalate, diisobutyl phthalate, diisoheptyl phthalate, di(2-ethylhexyl)phthalate and diisodecyl phthalate are preferred.

When the ester contained in the solid catalyst component of the present invention is dialkyl phthalate, it is derived from phthalic acid derivatives and is a compound of the above general formula in which S⁶ and S⁷ are substituted with alkoxy groups. In the preparation of the solid catalyst component, S⁶ and S⁷ of the phthalic acid derivative (c) used can be as they are or replaced by other substituents.

The solid catalyst component (α) used in the present invention is obtained by subjecting a solid component (a) obtained by reducing a titanium compound (ii) represented by the general formula [I] with an organomagnesium compound (iii), a halogenated compound (b) and a phthalic acid derivative (c) to a contact treatment with each other in the presence of an organosilicon compound (i) having an Si-O bond. The contact treatment is usually carried out under an atmosphere of an inert gas such as a nitrogen gas or an argon gas.

Specific examples of the contact treatment used to obtain the solid catalyst component (α) include:
a method in which the components (b) and (c) (the order of pouring is optional) are poured into the component (a), followed by a contact treatment,
a method in which the components (a) and (c) (the order of pouring is optional) are poured into the component (b), followed by a contact treatment,
a method in which the components (a) and (b) (the order of pouring is optional) are poured into the component (c), followed by a contact treatment,
a method in which the component (b) is poured into the component (a), followed by a contact treatment, the component (c) is poured thereinto and followed by a further contact treatment,
a method in which the component (c) is poured into the component (a), followed by a contact treatment, the component (b) is poured thereinto and followed by a further contact treatment,
a method in which the component (c) is poured into the component (a), followed by a contact treatment, the components (b) and (c) (the order of pouring is optional) are poured thereinto and followed by a further contact treatment,
a method in which the component (c) is poured into the component (a), followed by a contact treatment, a mixture of the components (b) and (c) is poured thereinto and followed by a further contact treatment,
a method in which the components (b) and (c) (the order of pouring is optional) are poured into the component (a), followed by a contact treatment, the component (b) is poured thereinto and followed by a further contact treatment, and
a methpd in which the components (b) and (c) (the order of pouring is optional) are poured into the component (a), followed by a contact treatment, a mixture of the components (b) and (c) is poured thereinto and followed by a further contact treatment.

Among these methods, a method in which the components (b2) and (c) (the order of pouring is optional) are poured into the component (a), followed by a contact treatment, the component (b1) is poured thereinto and followed by a further contact treatment, and a method in which the components (b2) and (c) (the order of pouring is optional) are poured into the component (a), followed by a contact treatment, the component (b1) is poured thereinto and followed by a further contact treatment are more preferred. Also, polymerization activity may be occasionally improved by repeating a contact treatment with the component (b1) plural times.

The contact treatment can be carried out by any known method capable of contacting the components with each other, such as a slurry method, or mechanical grinding means using a ball mill. Mechanical grinding is not preferred from the viewpoint of stably carrying out continuous polymerization since a large amount of fine powders are generated in the solid catalyst component and thus the particle size distribution may become wide. Therefore, both components are preferably contacted with each other in the presence of a solvent. After the contact treatment, the subsequent treatment can be directly carried out. However, it is preferred to carry out a treatment of washing with a solvent so as to remove extra substances.

The solvent is preferably inert against a component to be treated and, for example, aliphatic hydrocarbons such as pentane, hexane, heptane and octane; aromatic hydrocarbons such as benzene, toluene and xylene; alicyclic hydrocarbons such as cyclohexane and cyclopentane; and halogenated hydrocarbons such as 1,2-dichloroethane and monochlorobenzene can be used. The amount of the solvent in the contact treatment is usually from 0.1 mL to 1,000 mL, and preferably from 1 mL to 100 mL, based on 1 g of the solid component (a) per one-stage contact treatment. Also, the used amount of the solvent per one washing operation is almost the same as above. The number of the washing operations in the washing treatment is usually from 1 to 5 times per one-stage contact treatment.

Each temperature of the contact treatment and the washing treatment is usually from -50 to 150°C, preferably from 0 to 140°C, and still more preferably from 60 to 135°C. The contact treatment time is not particularly limited and is preferably from 0.5 to 8 hours, and more preferably from 1 to 6 hours. The washing operation time is not particularly limited and is preferably from 1 to 120 minutes, and more preferably from 2 to 60 minutes.

The used amount of the phthalic acid derivative (c) is usually from 0.01 to 100 mmol, preferably from 0.05 to 50 mmol, and more preferably from 0.1 to 20 mmol, based on 1 g of the solid component (a). When the amount of the phthalic acid derivative (c) to be used is excessively large, particle size distribution of the solid catalyst component (α) may become wide as a result of collapse of particles.

It is possible to optionally adjust the amount of the phthalic acid derivative (c) to be used so as to adjust the content of the phthalate ester in the solid catalyst component (α) to a proper value. The amount is usually from 0.1 to 100 mmol, preferably from 0.3 to 50 mmol, and more preferably from 0.5 to 20 mmol, based on 1 g of the solid component (a). The amount of the phthalic acid derivative (c) based on 1 mol of the magnesium atom in the solid component (a) is usually from 0.01 to 1.0 mol, and preferably from 0.03 to 0.5 mol.

The used amount of the halogenated compound (b) is usually from 0.5 to 1,000 mmol, preferably from 1 to 200 mmol, and more preferably from 2 to 100 mmol, based on 1 g of the solid component (a).

When the contact treatment is carried out by using each compound plural times, the used amount of each compound shown above means an amount of one kind of a compound per time.

The resulting solid catalyst component (α) may be used in combination with an inert solvent in the form of a slurry for the polymerization, or may be used for the polymerization in the form of a flowable powder obtained by drying. Examples of the drying method include a method of removing a volatile component under reduced pressure and a method of removing a volatile component under circulation of an inert gas such as a nitrogen gas or an argon gas. The temperature upon drying is preferably from 0 to 200°C, and more preferably from 50 to 100°C. The drying time is preferably from 0.01 to 20 hours, and more preferably from 0.5 to 10 hours. The weight average particle diameter of the solid catalyst component (α) is preferably from 1 to 100 µm from an industrial point of view.

The catalyst for polymerization of the ethylene-α-olefin copolymer used in the present invention is obtained by contacting the solid catalyst component (α) with an organoaluminum compound (β). If necessary, an electron-donating compound (γ) can be added for contact.

The organoaluminum compound (β) in the present invention has at least one aluminum-carbon bond in the molecule. Typical organoaluminum compounds are represented by the general formulas shown below:

R¹⁹_{w}AlY_{3-w}, and

R²⁰R²¹Al-O-AlR²²R²³

wherein R¹⁹ to R²³ represents a hydrocarbon group having 1 to 20 carbon atoms, Y represents a halogen atom, a hydrogen atom or an alkoxy group, and w represents a number satisfying a relation: 2 ≤ w ≤ 3.

Examples of the organoaluminum compound (β) include trialkylaluminums such as triethylaluminum, triisobutylaluminum and trihexylaluminum; dialkylaluminum hydrides such as diethylaluminum hydride and diisobutylaluminum hydride; dialkylaluminum halides such as diethylaluminum chloride; mixtures of trialkylaluminums and dialkylaluminum halides, such as a mixture of triethylaluminum and diethylaluminum chloride; and alkylalumoxanes such as tetraethyldialumoxane and tetrabutyldialumoxane.

Among these organoaluminum compounds, trialkylaluminum, a mixture of trialkylaluminum and dialkylaluminum halide, or alkylalumoxane is preferred, and triethylaluminum, triisobutylaluminum, a mixture of triethylaluminum and diethylaluminum chloride, or tetraethyldialumoxane is particularly preferred.

Examples of the electron-donating compound (γ) to be used to form a catalyst for olefin polymerization include an oxygen-containing compound, a nitrogen-containing compound, a phosphorus-containing compound and a sulfur-containing compound, and is preferably an oxygen-containing compound or a nitrogen-containing compound. Examples of the oxygen-containing compound include alkoxysilicons, ethers, esters and ketones, and preferably alkoxysilicons or ethers.

As alkoxysilicons, an alkoxysilicon compound represented by the general formula R³ᵣSi(OR⁴)₄₋ᵣ (wherein R³ represents a hydrocarbon group having 1 to 20 carbon atoms, a hydrogen atom or a heteroatom-containing substituent, R⁴ represents a hydrocarbon group having 1 to 20 carbon atoms, and r represents a number satisfying a relation: 0 ≤ r < 4, and when plural R³s and R⁴s exist, the respective R³s and R⁴s may be the same or different). When R³ is a hydrocarbon group, examples of the hydrocarbon group include linear alkyl groups such as a methyl group, an ethyl group, a propyl group, a butyl group and a pentyl group; branched chain alkyl groups such as an isopropyl group, a sec-butyl group, a tert-butyl group and a tert-amyl group; cycloalkyl groups such as a cyclopentyl group and a cyclohexyl group; cycloalkenyl groups such as a cyclopentenyl group; and aryl groups such as a phenyl group and a tolyl group. It is preferred that a carbon atom bonded directly with a silicon atom of an alkoxysilicon compound has at least one R³ as secondary or tertiary carbon. When R³ is a heteroatom-containing substituent, examples of the heteroatom include an oxygen atom, a nitrogen atom, a sulfur atom and a phosphorus atom. Specific examples thereof include a dimethylamino group, a methylethylamino group, a diethylamino group, an ethyl-n-propylamino group, a di-n-propylamino group, a pyrrolyl group, a pyridyl group, a pyrrolidinyl group, a piperidyl group, a perhydroindolyl group, a perhydroisoindolyl group, a perhydroquinolyl group, a perhydroisoquinolyl group, a perhydrocarbazolyl group, a perhydroacridinyl group, a furyl group, a pyranyl group, a perhydrofuryl group and a thienyl group. Among these groups, preferred is a substituent in which a heteroatom can be directly chemically bonded to a silicon atom of an alkoxysilicon compound.

Examples of alkoxysilicons include diisopropyldimethoxysilane, diisobutyldimethoxysilane, di-tert-butyldimethoxysilane, tert-butylmethyldimethoxysilane, tert-butylethyldimethoxysilane, tert-butyl-n-propyldimethoxysilane, tert-butyl-n-butyldimethoxysilane, tert-amylmethyldimethoxysilane, tert-amylethyldimethoxysilane, tert-amyl-n-propyldimethoxysilane, tert-amyl-n-butyldimethoxysilane, isobutylisopropyldimethoxysilane, tert-butylisopropyldimethoxysilane, dicyclobutyldimethoxysilane, cyclobutylisopropyldimethoxysilane, cyclobutylisobutyldimethoxysilane, cyclobutyl-tert-butyldimethoxysilane, dicyclopentyldimethoxysilane, cyclopentylisopropyldimethoxysilane, cyclopentylisobutyldimethoxysilane, cyclopentyl-tert-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-tert-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-tert-butyldimethoxysilane, phenylcyclopentyldimethoxysilane, diisopropyldiethoxysilane, diisobutyldiethoxysilane, di-tert-butyldiethoxysilane, tert-butylmethyldiethoxysilane, tert-butylethyldiethoxysilane, tert-butyl-n-propyldiethoxysilane, tert-butyl-n-butyldiethoxysilane, tert-amylmethyldiethoxysilane, tert-amylethyldiethoxysilane, tert-amyl-n-propyldiethoxysilane, tert-amyl-n-butyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, 2-norbornanemethyldimethoxysilane, bis(perhydroquinolino)dimethoxysilane, bis(perhydroisoquinolino)dimethoxysilane, (perhydroquinolino)(perhydroisoquinolino)dimethoxysilane, (perhydroquinolino)methyldimethoxysilane, (perhydroisoquinolino)methyldimethoxysilane, (perhydroquinolino)ethyldimethoxysilane, (perhydroisoquinolino)ethyldimethoxysilane, (perhydroquinolino)(n-propyl)dimethoxysilane, (perhydroisoquinolino)(n-propyl)dimethoxysilane, (perhydroquinolino)(tert-butyl)dimethoxysilane and (perhydroisoquinolino)(tert-butyl)dimethoxysilane.

Examples of ethers include a cyclic ether compound. The cyclic ether compound is a heterocyclic compound having at least one -C-O-C- bond in the ring structure. Examples of the cyclic ether compound include ethylene oxide, propylene oxide, trimethylene oxide, tetrahydrofuran, 2,5-dimethoxytetrahydrofuran, tetrahydropyran, hexamethylene oxide, 1,3-dioxepane, 1,3-dioxane, 1,4-dioxane, 1,3-dioxolane, 2-methyl-1,3-dioxolane, 2,2-dimethyl-1,3-dioxolane, 4-methyl-1,3-dioxolane, 2,4-dimethyl-1,3-dioxolane, furan, 2,5-dimethylfuran and s-trioxane. A cyclic ether compound having at least one -C-O-C-O-C- bond in the ring structure is preferred.

Examples of esters include mono or polyhydric carboxylate esters, for example, a saturated aliphatic carboxylate ester, an unsaturated aliphatic carboxylate ester, an alicyclic carboxylate ester and an aromatic carboxylate ester. Specific examples thereof include methyl acetate, ethyl acetate, phenyl acetate, methyl propionate, ethyl propionate, ethyl butyrate, ethyl valerate, ethyl acrylate, methyl methacrylate, ethyl benzoate, butyl benzoate, methyl toluate, ethyl toluate, ethyl anisate, diethyl succinate, dibutyl succinate, diethyl malonate, dibutyl malonate, dimethyl maleate, dibutyl maleate, diethyl itaconate, dibutyl itaconate, monoethyl phthalate, dimethyl phthalate, methylethyl phthalate, diethyl phthalate, di-n-propyl phthalate, diisopropyl phthalate, di-n-butyl phthalate, diisobutyl phthalate, dipentyl phthalate, di-n-hexyl phthalate, diheptyl phthalate, di-n-octyl phthalate, di(2-ethylhexyl) phthalate, diisodecyl phthalate, dicyclohexyl phthalate and diphenyl phthalate.

Examples of ketones include acetone, methyl ethyl ketone, methyl isobutyl ketone, ethyl butyl ketone, dihexylketone, acetophenone, diphenylketone, benzophenone and cyclohexanone.

Examples of the nitrogen-containing compound include 2,6-substituted piperidines such as 2,6-dimethylpiperidine and 2,2,6,6-tetramethylpiperidine; 2,5-substituted piperidines; substituted methylenediamines such as N,N,N',N'-tetramethylmethylenediamine and N,N,N',N'-tetraethylmethylenediamine; and substituted imidazolidines such as 1,3-dibenzylimidazolidine. 2,6-substituted piperidines are preferred.

The electron-donating compound (γ) is particularly preferably cyclohexylmethyldimethoxysilane, cyclohexylethyldimethoxysilane, diisopropyldimethoxysilane, tert-butylethyldimethoxysilane, tert-butyl-n-propyldimethoxysilane, phenyltrimethoxysilane, diphenyldimethoxysilane, dicyclobutyldimethoxysilane, dicyclopentyldimethoxysilane, 1,3-dioxolane, 1,3-dioxane, 2,6-dimethylpiperidine or 2,2,6,6-tetramethylpiperidine.

The catalyst for polymerization used in the present invention is obtained by contacting the solid catalyst component (α) and the organoaluminum compound (β) and, if necessary, an electron-donating compound (γ) with each other. The contact as used herein may be carried out by any means as long as the catalyst components (α) and (β) (if necessary, the component (γ)) are contacted with each other to form a catalyst, and there can be employed a method in which these components are contacted by mixing them with each other with or without being diluted with a solvent preliminarily, and a method in which these components are separately fed to a polymerization tank and then contacted with each other in the polymerization tank. The method of feeding each catalyst component to the polymerization tank is preferably a method of feeding in a state of being free from moisture in an inert gas such as nitrogen or argon. Each catalyst component may be fed after preliminarily contacting optional two components with each other.

Although the ethylene-α-olefin copolymer can be prepared by copolymerizing ethylene and an α-olefin in the presence of the above catalyst, prepolymerization described hereinafter may also be carried out before the copolymerization (hereinafter may be referred to as main polymerization).

The prepolymerization is usually carried out by feeding a small amount of olefin in the presence of a solid catalyst component (α) and an organoaluminum compound (β) and is preferably carried out in a state of a slurry. Examples of the solvent used to form a slurry include inert hydrocarbons such as propane, butane, isobutane, pentane, isopentane, hexane, heptane, octane, cyclohexane, benzene and toluene. In the case of forming a slurry, a liquid olefin can be used in place of a portion or all of an inert hydrocarbon solvent.

Upon the prepolymerization, the used amount of the organoaluminum compound can be usually selected within a wide range from 0.5 to 700 mol, preferably from 0.8 to 500 mol, and particularly preferably from 1 to 200 mol, based on 1 mol of a titanium atom in the solid catalyst component.

The amount of the olefin to be prepolymerized is usually from 0.01 to 1,000 g, preferably from 0.05 to 500 g, and particularly preferably from 0.1 to 200 g, based on 1 g of the solid catalyst component.

Upon prepolymerization, the concentration of the slurry is preferably from 1 to 500 g-solid catalyst component/L-solvent, and particularly preferably from 3 to 300 g-solid catalyst component/L-solvent. The prepolymerization temperature is preferably from -20 to 100°C, and particularly preferably from 0 to 80°C. The partial pressure of the olefin at a vapor phase portion in the prepolymerization is preferably from 1 kPa to 2 MPa, and particularly preferably from 10 kPa to 1 MPa, but is not necessarily required to be within the above range with respect to the olefin which is liquid at the pressure and temperature for prepolymerization. The polymerization time is not particularly limited, and is usually from 2 minutes to 15 hours.

In the case of carrying out the prepolymerization, as the method of feeding the solid catalyst component (α), the organoaluminum compound (β) and the olefin, for example, any of a method in which the olefin is fed after contacting the solid catalyst component (α) with the organoaluminum compound (β) and a method in which the organoaluminum compound (β) is fed after contacting the solid catalyst component (α) with the olefin may be employed. As the method of feeding the olefin, any of a method in which the olefin is sequentially fed while maintaining the pressure in a polymerization tank at a predetermined pressure and a method in which a predetermined amount of the olefin is fed at a time may be employed. Although a chain transfer agent such as hydrogen is usually added so as to adjust the molecular weight, the ethylene-α-olefin copolymer in the present invention can be prepared by polymerizing in the presence of a small amount of the chain transfer agent such as hydrogen or absence of the chain transfer agent. Specifically, at the vapor phase portion on the surface of the slurry in the slurry polymerization, or the vapor phase portion in the vapor phase polymerization, the partial pressure of hydrogen relative to the sum of partial pressures of hydrogen, ethylene and α-olefin is usually 0.10 or less, preferably 0.05 or less, and particularly preferably 0.02 or less.

When a solid catalyst component (α) is prepolymerized with a small amount of an olefin in the presence of an organoaluminum compound (β), the component may be prepolymerized in the presence of an electron-donating compound (γ) as necessary. The electron-donating compound to be used is a portion or all of the electron-donating compound (γ). The amount is usually from 0.01 to 400 mol, preferably from 0.02 to 200 mol, and particularly preferably from 0.03 to 100 mol, based on 1 mol of titanium atoms contained in the solid catalyst component (α), and is usually from 0.003 to 5 mol, preferably from 0.005 to 3 mol, and particularly preferably from 0.01 to 2 mol, based on the organoaluminum compound (β). Upon prepolymerization, the method of feeding the electron-donating compound (γ) is not particularly limited. It may be fed separately with the organoaluminum compound (β), or may be fed after preliminarily contacting with the organoaluminum compound (β). The olefin to be used in the prepolymerization may be the same as or different from that to be used in the main polymerization.

With or without carrying out the prepolymerization, in the presence of a catalyst for polymerization including the solid catalyst component (α) and the organoaluminum compound (β), ethylene and one or more kinds of monomers selected from α-olefins having 4 to 10 carbon atoms can be subjected to copolymerization (main polymerization).

Upon main polymerization, the amount of the organoaluminum compound to be used can be usually within a wide range from 1 to 1,000 mol, and particularly preferably from 5 to 600 mol, based on 1 mol of titanium atoms in the solid catalyst component (α).

When the electron-donating compound (γ) is used upon main polymerization, the amount is usually from 0.1 to 2000 mol, preferably from 0.3 to 1,000 mol, and particularly preferably from 0.5 to 800 mol, based on 1 mol of titanium atoms contained in the solid catalyst component (α), and is usually from 0.001 to 5 mol, preferably from 0.005 to 3 mol, and particularly preferably from 0.01 to 1 mol, based on the organoaluminum compound.

Main polymerization can be usually carried out at a temperature within a range from -30 to 300°C, preferably from 20 to 180°C, more preferably from 40 to 100°C, and still more preferably from 50 to 80°C. In order to adjust a shutdown temperature of a laminated porous film formed by laminating a heat-resistant resin layer on a porous film made from a polyolefin-based resin containing the resulting ethylene-α-olefin copolymer to 120°C or lower, it is necessary to carry out main polymerization at 65°C to 75°C, and thus it is possible to obtain an ethylene-α-olefin copolymer having a cold xylene soluble portion (CXS) of 1.2 or more and 6.0 or less contained in the ethylene-α-olefin copolymer. Although there is no restriction on the polymerization pressure, the polymerization pressure employed is from normal pressure to 10 MPa, and preferably from about 200 kPa to 5 MPa, from an industrial and economical point of view. The polymerization form can be any of batch-wise or continuous polymerization. It is also possible to impart various distributions (molecular weight distribution, comonomer composition distribution, etc.) by continuously passing through plural polymerization stages or reactors with different polymerization conditions. It is also possible to carry out slurry polymerization or solution polymerization using an inert hydrocarbon solvent such as propane, butane, isobutane, pentane, hexane, heptane or octane, or bulk polymerization or vapor phase polymerization using a liquid olefin at the polymerization temperature as a medium.

Upon main polymerization, it is preferred that a chain transfer agent such as hydrogen is not added so as to increase the molecular weight (intrinsic viscosity) of the polymer, and the intrinsic viscosity of the resulting ethylene-α-olefin copolymer is adjusted by adjusting the temperature or time of main polymerization.

When the ethylene-α-olefin copolymer in the present invention is prepared by main polymerization in the presence of a catalyst for polymerization including the solid catalyst component (α) and the organoaluminum compound (β), slurry polymerization is preferably carried out using butane or hexane as an inert hydrocarbon solvent. In order to adjust the shutdown temperature of the laminated porous film obtained using the ethylene-α-olefin copolymer to 120°C or lower, it is preferred to prepare an ethylene-α-olefin copolymer by carrying out main polymerization using hexane as an inert hydrocarbon solvent and thereafter subjecting the resulting ethylene-α-olefin copolymer and the remaining solvent to solid-liquid separation. When hexane is used as the inert hydrocarbon solvent, since the shutdown temperature of a laminated porous film may occasionally exceed 125°C if main polymerization is carried out at a polymerization temperature of 60°C or lower, it is required to pay attention to the amount of the α-olefin relative to the amount of ethylene. When a porous film is prepared using an ethylene-α-olefin copolymer obtained by carrying out main polymerization at 65 to 75°C using hexane as an inert hydrocarbon solvent, a laminated porous film having a shutdown temperature of 120°C or lower can be obtained regardless of a small film thickness of 10 µm to 30 µm, and preferably 15 µm to 25 µm of the porous film and 11 µm to 40 µm, and preferably 16 µm to 30 µm of the laminated porous film. When the ethylene-α-olefin copolymer is an ethylene-1-butene copolymer or an ethylene-1-hexene copolymer, the above can be preferably applied.

The polyolefin-based resin which forms the porous film in the present invention preferably contains 100 parts by weight of the ethylene-α-olefin copolymer, and a low molecular weight polyolefin having a weight average molecular weight of 10,000 or less in an amount of 5 to 200 parts by weight, more preferably 10 to 100 parts by weight, and further preferably 20 to 60 parts by weight, based on 100 parts by weight of the ethylene-α-olefin copolymer. The polyolefin-based resin containing the ethylene-α-olefin copolymer and the low molecular weight polyolefin having a weight average molecular weight of 10,000 or less has excellent drawability and is suited for preparation of a porous film by the method of the present invention described later. The weight average molecular weight of the low molecular weight polyolefin is measured by GPC (gel permeation chromatography) and the content (% by weight) of each component can be determined by integration of a molecular weight distribution curve obtained by GPC measurement. In many cases, the solvent used in GPC measurement is o-dichlorobenzene and the measuring temperature is 140°C.

Specific examples of the low molecular weight polyolefin having a weight average molecular weight of 10,000 or less used in the present invention include polyethylene-based resins such as low-density polyethylene, linear polyethylene (ethylene-α-olefin copolymer) and high-density polyethylene, polypropylene-based resins such as polypropylene and an ethylene-propylene copolymer; poly-4-methylpentene-1, poly(butene-1) and an ethylene-vinyl acetate copolymer. When the laminated porous film of the present invention is used as a separator for a battery, the low molecular weight polyolefin having a weight average molecular weight of 10,000 or less is preferably a solid wax at 25°C. Such a low molecular weight polyolefin is less likely to exert an adverse influence on battery characteristics even when remained in the porous film.

The laminated porous film of the present invention preferably exhibits an air permeability of 50 to 1,000 seconds/100 cc, and more preferably 50 to 200 seconds/100 cc in view of quick cut-off of the current at low temperature and ion permeability.

Examples of the method for preparing a porous film in the present invention include, but are not limited to, a method as described in Japanese Unexamined Patent Publication (Kokai) No. 7-29563 in which a plasticizer is added to a polyolefin-based resin and, after the mixture is formed into a film, the plasticizer is removed by a suitable solvent, and a method as described in Japanese Unexamined Patent Publication (Kokai) No. 7-304110 in which a film made of a polyolefin-based resin prepared by a known method is used and an amorphous portion having a weak structure of the film is selectively drawn to form micropores. When the porous film of the present invention is formed from a polyolefin-based resin containing an ethylene-α-olefin copolymer and a low molecular weight polyolefin having a weight average molecular weight of 10,000 or less, it is preferably prepared by the method shown below in view of the production cost. That is, it is a method including the steps of:
(1) kneading 100 parts by weight of an ethylene-α-olefin copolymer, 5 to 200 parts by weight of a low molecular weight polyolefin having a weight average molecular weight of 10,000 or less and 100 to 400 parts by weight of an inorganic filler to obtain a polyolefin-based resin composition;
(2) forming a sheet using the polyolefin-based resin composition;
(3) removing the inorganic filler from the sheet obtained in step (2); and
(4) drawing the sheet obtained in step (3) to obtain a porous film; or
   (1) kneading 100 parts by weight of an ethylene-α-olefin copolymer, 5 to 200 parts by weight of a low molecular weight polyolefin having a weight average molecular weight of 10,000 or less and 100 to 400 parts by weight of an inorganic filler to obtain a polyolefin-based resin composition;
   (2) forming a sheet using the polyolefin-based resin composition;
   (3) drawing the sheet obtained in step (2); and
   (4) removing the inorganic filler (C) from the drawn sheet obtained in step (3). Since the shutdown temperature of the laminated porous film obtained by laminating a heat-resistant resin layer on the resulting porous film can be adjusted to 120°C or lower, the former method, namely, the method of drawing after removing the inorganic filler in the sheet is preferred.

In the porous film obtained by removing the inorganic filler, about 100 to 20,000 ppm of the inorganic filler is preferably remained. The following effect is expected to the porous film containing a small amount of the inorganic filler remaining therein, that is, short circuit between electrodes is prevented even if the polyolefin-based resin constituting the porous sheet is melted when used as a separator for a battery. The porous film containing a small amount of the inorganic filler remaining therein is excellent in permeability when compared with the case where the inorganic filler is completely removed. The reason is not clear but is considered that a trace amount of the filler remaining in the film prevents collapse of the film in the direction of a film thickness.

In view of strength and ion permeability of the porous film, the inorganic filler to be used preferably has an average particle diameter (diameter) of 0.5 µm or less, and more preferably 0.2 µm or less. The average particle diameter of the inorganic filler in the present invention is a value determined by a SEM micrograph of the inorganic filler. Specifically, the diameter of 100 particles is measured by observation using a scanning electron microscope SEM (×30,000 magnification) and an average thereof is taken as an average particle diameter (µm).

Examples of the inorganic filler include calcium carbonate, magnesium carbonate, barium carbonate, zinc oxide, calcium oxide, aluminum hydroxide, magnesium hydroxide, calcium hydroxide, calcium sulfate, silicic acid, zinc oxide, calcium chloride, sodium chloride and magnesium sulfate. These inorganic fillers can be removed from the sheet or film using an acid or alkali solution.. In the present invention, calcium carbonate is preferably used since those having a small particle diameter are easily available.

Although the method for preparing a polyolefin-based resin composition is not particularly limited, materials constituting the polyolefin-based resin composition, for example, a polyolefin-based resin and an inorganic filler are mixed using a mixer such as a roll, a Banbury mixer, a single screw extruder or a twin screw extruder to obtain a polyolefin-based resin composition. Upon mixing materials, additives such as fatty acid esters, stabilizers, antioxidants, ultraviolet absorbers and flame retardants may be optionally added.

The method of preparing a sheet made of the polyolefin-based resin composition used in the present invention is not specifically limited and a sheet can be prepared by a sheet forming method such as inflation, calendering, T-die extrusion or a skife method. Since a sheet having high accuracy of film thickness is obtained, the sheet is preferably prepared by the following method.

A preferred method for producing a sheet made of a polyolefin-based resin composition is a method in which a polyolefin-based resin composition is roll-formed using a pair of rotational molding tools adjusted to a surface temperature which is higher than a melting point of a polyolefin-based resin contained in the polyolefin-based resin composition. The surface temperature of the rotational molding tool is preferably (melting point + 5)°C or higher. The upper limit of the surface temperature is preferably

(melting point + 30)°C or lower, and more preferably (melting point + 20)°C or lower. Examples of a pair of rotational molding tools include rolls and belts. It is not necessarily required that peripheral velocities of both rotational molding tools are strictly the same and a difference in the peripheral velocity is only required to be within ±5%. By preparing a porous film using the film obtained by the method, a porous film having excellent strength, ion permeation and air permeability can be obtained. Also, a laminate obtained by laminating single-layered sheets obtained by the above method may be used in the preparation of the porous film.

When the polyolefin-based resin composition is roll-formed using a pair of rotational molding tools, a polyolefin-based resin composition ejected into a strand through an extruder may be directly introduced between a pair of rotational molding tools and a pelletized polyolefin-based resin composition may also be used.

When the sheet made of the polyolefin-based resin composition or the sheet obtained by removing the inorganic filler from the above sheet is drawn, a tenter, a roll, an autograph or the like can be used. In view of air permeability, a draw ratio is preferably from 2 to 12 times, and more preferably from 4 to 10 times. The drawing temperature is usually a temperature which is equal to or higher than the softening point and equal to or lower than the melting point of a polyolefin-based resin, and preferably from 80 to 115°C. When the drawing temperature is too low, the film is likely to be broken during drawing. In contrast, when the drawing temperature is too high, air permeability and ion permeability of the film may deteriorate. After drawing, heatsetting is preferably carried out. The heatsetting temperature is preferably a temperature which is lower than a melting point of the polyolefin-based resin.

In the present invention, a laminated porous film is obtained by laminating a porous heat-resistant resin layer on at least one surface of the porous film made from the polyolefin-based resin obtained by the above method. The heat-resistant resin layer may be formed on one surface of the porous film, or may be formed on both surfaces. The laminated porous film of the present invention has a thermal film breakage temperature of 155°C or higher by laminating a heat-resistant resin layer as described above. The laminated porous film of the present invention obtained by laminating a heat-resistant resin layer on a porous film is excellent in uniformity of film thickness, heat resistance, strength and air permeability (ion permeability) and therefore can be suitably used as a separator for a nonaqueous electrolyte secondary battery, especially a separator for a lithium secondary battery.

The thermal film breakage temperature of the laminated porous film of the present invention is 155°C or higher, and the upper limit thereof, that is, the highest temperature at which the shutdown state can be maintained depends on the kind of the resin constituting the heat-resistant resin layer. The heat-resistant resin constituting the heat-resistant resin layer is preferably one which is selected from the group consisting of polypropylene, poly-4-methylpentene-1, a polymer containing a nitrogen atom and a cyclic olefin-based polymer. When polypropylene is used as the heat-resistant resin, the upper limit of the thermal film breakage temperature of the laminated porous film is about 180°C. When poly-4-methylpentene-1 is used, the upper limit is about 250°C. When a polymer containing a nitrogen atom is used, the upper limit is about 400°C. When a cyclic olefin-based polymer is used, the upper limit is about 300°C. Among the above heat-resistant resins constituting the heat-resistant resin layer, a polymer containing a nitrogen atom or a cyclic olefin-based polymer is preferred, and a polymer containing a nitrogen atom is more preferred.

The polymer containing a nitrogen atom is preferably a nitrogen-containing aromatic polymer. Examples of the nitrogen-containing aromatic polymer include an aromatic polyamide (hereinafter may be referred to as an "aramid"), an aromatic polyimide and an aromatic polyamideimide. Examples of the aramid include a meta-oriented aromatic polyamide and a para-oriented aromatic polyamide (hereinafter may be referred to as a "para-aramid") and a para-aramid is preferred since a porous heat-resistant resin layer having a uniform thickness and excellent air permeability is easily formed.

The para-aramid is obtained by condensation polymerization of a para-oriented aromatic diamine with a para-oriented aromatic dicarboxylic halide, and substantially consists of repeating units in which amide bonds are bonded at a para-position or a similar orientation position (for example, an orientation position extending co-axially or in parallel to a reverse direction such as 4,4'-biphenylene, 1,5-naphthalene, 2,6-naphthalene, and the like). Specific examples thereof include para-aramids having a para-orientation structure or a similar structure, such as poly(paraphenyleneterephthalamide), poly(parabenzamide, poly(4,4'-benzanilideterephthalamide), poly(paraphenylene-4,4'-biphenylenedicarboxylic amide), poly(paraphenylene-2,6-naphthalenedicarboxylic amide), poly(2-chloroparaphenyleneterephthalamide) and a paraphenyleneterephthalamide/2,6-dichloroparaphenyleneterephthalamide copolymer.

The cyclic olefin-based polymer is a polymer containing 30% by mol or more of a structural unit derived from a cyclic olefin monomer and specific examples thereof include a copolymer (polymer [A]) of a monomer selected from the group consisting of ethylene, propylene and α-olefins having 4 to 12 carbon atoms, and a cyclic olefin monomer described later, a ring-opening homopolymer of a cyclic olefin monomer or a copolymer of two or more kinds of cyclic olefin monomers (polymer [B]), or a hydrogenated product (polymer [C]) of the polymer [B]. The cyclic olefin monomer is a compound represented by the formula [II] shown below: 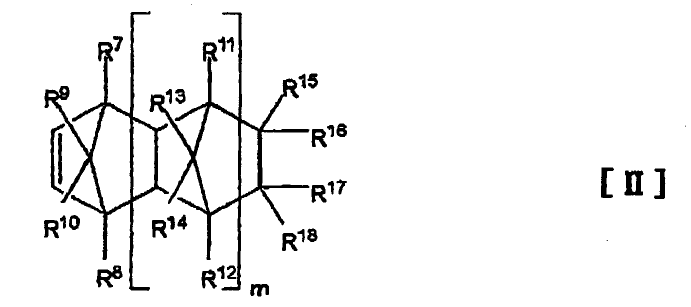 wherein R¹ to R¹⁸ each independently represent a hydrogen atom, a hydroxyl group, an amino group, a phosphino group or an organic group having 1 to 20 carbon atoms, R¹⁶ and R¹⁷ may optionally form a ring, and m represents an integer of 0 or more.

Spesific examples of the organic group having 1 to 20 carbon atoms include alkyl groups such as a methyl group, an ethyl group, a propyl group, a butyl group, a hexyl group, an octyl group and a dodecyl group; aryl groups such as a phenyl group, a tolyl group and a naphthyl group; aralkyl groups such as a benzyl group and a phenethyl group; alkoky groups such as a methoxy group and an ethoxy group; aryloxy groups such as a phenoxy group; acyl groups such as an acetyl group; alkoxycarbonyl groups, aryloxycarbonyl groups and aralkyloxycarbonyl groups such as a methoxycarbonyl group and an ethoxycarbonyl group; acyloxy groups such as an acetyloxy group; alkoxysulphonyl groups, aryloxysulphonyl groups and aralkyloxysulphonyl groups such as a methoxysulphonyl group and an ethoxysulphonyl group; substituted silyl groups such as a trimethylsilyl group; dialkylamino groups such as a dimethylamino group and a diethylamino group; a carboxyl group; a cyano group; and groups in which a portion of the hydrogen atoms of the above alkyl groups, aryl groups and aralkyl groups are substituted with a hydroxyl group, an amino group, an acyl group, a carboxyl group, an alkoky group, an alkoxycarbonyl group, an acyloxy group, a substituted silyl group, an alkylamino group or a cyano group.

Preferable examples of R⁷ to R¹⁸ include, each independently, a hydrogen atom, an alkyl group having 1 to 20 carbon atoms, an aryl group having 6 to 20 carbon atoms, an aralkyl group having 7 to 20 carbon atoms, an acyl group having 1 to 20 carbon atoms, an alkoxycarbonyl group having 2 to 20 carbon atoms, an acyloxy group having 1 to 20 carbon atoms and a disubstituted silyl group having 1 to 20 carbon atoms. m is an integere of 0 or more, and preferably an integer satisfying a relation: 0 ≤ m ≤ 3.

Preferable examples of the cyclic olefin monomer represented by the general formula [II] include norbornene, 5-methylnorbornene, 5-ethylnorbornene, 5-butylnorbornene, 5-phenylnorbornene, 5-benzylnorbornene, tetracyclododecene, tricyclodecene, tricycloundecene, pentacyclopentadecene, pentacyclohexadecene, 8-methyltetracyclododecene, 8-ethyltetracyclododecene, 5-acetylnorbornene, 5-acetyloxynorbornene, 5-methoxycarbonylnorbornene, 5-ethoxycarbonylnorbornene, 5-methyl-5-methoxycarbonylnorbornene, 5-cyanonorbornene, 8-methoxycarbonyl tetracyclododecene, 8-methyl-8-tetracyclododecene and 8-cyanotetracyclododecene. In the present invention, these cyclic olefin monomers represented by the formula [II] may be used alone, or two or more kinds of them may be used in combination.

The polymer [A] is a copolymer of one or more kinds of monomers selected from ethylene, propylene and α-olefins having 4 to 12 carbon atoms, and one or more kinds of cyclic olefin monomers represented by the formula [II]. Examples of the α-olefin having 4 to 12 carbon atoms include 1-butene, 1-pentene, 1-hexene, 1-heptene, 1-octene, 1-nonene and 1-decene. In view of heat resistance of the obtained film, the one or more kinds of monomers selected from the group consisting of ethylene, propylene and α-olefins having 4 to 12 carbon atoms are preferably ethylene, propylene or 1-butene. In addition, by changing the ratio of the one or more kinds of monomers selected from the group consisting of ethylene, propylene and α-olefins having 4 to 12 carbon atoms and the one or more kinds of cyclic olefin monomers represented by the formula [II], it is possible to control the thermal film breakage temperature of the laminated porous film of the present invention.

The polymer [B] is a polymer obtained by carrying out ring-opening polymerization using one or more kinds of the cyclic olefin monomers represented by the formula [II].

The polymer [C] is a polymer obtained by hydrogenating the polymer [B].

The cyclic olefin-based polymer used in the present invention can be polymerized by a known method. For example, the polymer [A] is produced by a homogenous catalyst made from a vanadium compound and an organoaluminum compound as disclosed in Japanese Patent No. 2693596. The polymer [B] can be produced, for example, by using a metathesis polymerization catalyst obtained by combining a tungsten compound and a compound of a Group IA, IIA or IIB element in the Deming's Periodic Table which has a bond between the element and carbon as disclosed in Japanese Patent No. 2940014. The polymer [C] is usually obtained by reacting the polymer [B] with a hydrogen gas under 3 to 150 atm. at a reaction temperature of 20 to 150°C.

Since the cyclic olefin-based polymer having an unsaturated bond is easy to degrade upon film formation and tends to produce foreign matters in the resulting film, it is preferable to use the polymer [A] or the polymer [C] in the present invention.

When the heat-resistant resin layer is laminated, a heat-resistant resin is usually dissolved in a solvent and is used as a coating solution. When the heat-resistant resin is a para-aramid, a polar amide-based solvent or a polar urea-based solvent can be used as the solvent. Specific examples thereof include, but are not limited to, N,N-dimethylformamide, N,N-dimethylacetamide, N-methyl-2-pyrrolidone (NMP) and tetramethylurea.

In view of coatability, the heat-resistant resin preferably has an intrinsic viscosity of 1.0 dl/g to 2.8 dl/g, and more preferably 1.7 dl/g to 2.5 dl/g. A satisfactory strength of the heat-resistant resin layer may not be obtained when the intrinsic viscosity is less than 1.0 dl/g. When the intrinsic viscosity is more than 2.8 dl/g, it is difficult to obtain a stable heat-resistant resin-containing coating solution. The intrinsic viscosity as used herein is a value obtained in the form of a heat-resistant resin sulfuric acid solution prepared by dissolving the precipitated heat-resistant resin, and is an indicator of the so-called molecular weight. In view of coatability, the concentration of the heat-resistant resin in the coating solution is preferably from 0.5 to 10% by weight.

When the para-aramid is used as the heat-resistant resin, a chloride of an alkali metal or an alkali earth metal is preferably added during the polymerization of the para-aramid for the purpose of improving solubility of the para-aramid in the solvent. Specific examples thereof include, but are not limited to, lithium chloride or calcium chloride. The amount of the chloride to be added to the polymerization system is preferably within a range from 0.5 to 6.0 mol, and more preferably from 1.0 to 4.0 mol, based on 1.0 mol of amide groups produced in the condensation polymerization. When the amount is less than 0.5 mol, the resulting para-aramid may have insufficient solubility. In contrast, when the amount is more than 6.0 mol, it may not be preferred since the amount substantially exceeds solubility of the chloride in the solvent. When the amount of the chloride of an alkali metal or an alkali earth metal is less than 2% by weight, the para-aramid may have insufficient solubility. In contrast, when the amount is more than 10% by weight, the chloride of an alkali metal or an alkali earth metal may not be dissolved in a polar organic solvent such as a polar amide-based solvent or a polar urea-based solvent.

The aromatic polyimide is preferably a fully aromatic polyimide prepared by polycondensation of an aromatic diacid anhydride and diamine. Specific examples of the diacid anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane and 3,3',4,4'-biphenyltetracarboxylic dianhydride. Specific examples of the diamine include oxydianiline, paraphenylenediamine, benzophenonediamine, 3,3'-methylenedianiline, 3,3'-diaminobenzophenone, 3,3'-diaminodiphenylsulfone and 1,5'-naphthalenediamine, but the present invention is not limited thereto. In the present invention, a polyimide soluble in the solvent can be suitably used. Examples of the polyimide include a polyimide of a polycondensate of 3,3',4,4'-diphenylsulfonetetracarboxylic dianhydride and an aromatic diamine. As the polar organic solvent in which the polyimide is dissolved, in addition to those exemplified as the solvent in which the aramid is dissolved, dimethyl sulfoxide, cresol and o-chlorophenol can be suitably used.

In the present invention, the heat-resistant resin layer preferably further contains an organic powder and/or an inorganic powder. In this case, by changing the addition amount of the organic powder and/or the inorganic powder, it is postible to control the porosity of the obtained heat-resistant resin layer. The particle diameter of the organic powder and/or the inorganic powder is preferably 1.0 µm or less in view of maintaining the strength characteristics and smoothness of the laminated porous film and preferably 0.01 µm or more in view of workability in terms of the average particle diameter of the primary particles. The addition amount of the organic powder and/or the inorganic powder is preferably 20% by weight or more and 95% by weight or less and further preferably 30% by weight or more and 91% by weight or less relative to the total weight of the heat-resistant resin layer from the viewpoint of maintaining the strength characteristics of the laminated porous film. The shape of the organic powder and/or the inorganic powder may be a spherical shape or a rod-like shape, but it is preferably a spherical shape.

Examples of the organic powder include powders made of organic substances including fluorine-based resins such as homopolymers and copolymers of two or more kinds of stylene, vinyl ketone, acrylonitrile, methyl methacrylate, ethyl methacrylate, glycidyl methacrylate, glycidyl acrylate and methyl acrylate, polytetrafluoroethylene, a copolymer of ethylene tetrafluoride-propylene hexafluoride, a copolymer of ethylene tetrafluoride-ethylene and polyvinylidene fluoride; melamine resins; urea resins; polyolefins; and polymethacrylates. The organic powder may be used alone or can also be used in a state of a mixture of plural kinds of them. Among these organic powders, polytetrafluoroethylene is preferred in view of chemical stability.

Examples of the inorganic powder include powders made of inorganic substances such as metal oxides, metal nitrides, metal carbides, metal hydroxides, carbonates and sulfates. Specific examples thereof include powders made of alumina, silica, titanium dioxide or calcium carbonate. The inorganic powder may be used alone or can also be used in a state of a mixture of plural kinds of them. Among these inorganic powders, alumina is preferred in view of chemical stability.

The average pore diameter measured by a mercury penetration method of the heat-resistant resin layer is preferably 3 µm or less, and more preferably 1 µm or less. When the average pore diameter is more than 3 µm, in the case of using a laminated porous film having a heat-resistant resin layer as a separator for a battery, there may arise a problem that short circuit is likely to occur when carbon powders as a main component of a cathode and an anode or small pieces thereof fall off. The porosity of the heat-resistant resin layer is preferably from 30 to 80% by volume, and more preferably from 40 to 70% by volume. When the porosity is less than 30% by volume, the retention amount of the electrolytic solution may decrease when the laminated porous film is used as a separator for a battery. In contrast, when the porosity is more than 80% by volume, the heat-resistant resin layer may have insufficient strength. The thickness of the heat-resistant resin layer is preferably from 1 to 15 µm, and more preferably from 1 to 10 µm. When the thickness is less than 1 µm, the heat resistance effect may be insufficient. In contrast, when the thickness is more than 15 µm, high electric capacity may not be easily attained because of too large a thickness when the laminated porous film having a heat-resistant resin layer is used as a separator for a nonaqueous electrolyte secondary battery.

Examples of the method of laminating a heat-resistant resin layer on a porous film formed from a polyolefin-based resin include a method in which a heat-resistant resin layer is separately prepared and then laminated with a porous film, and a method in which a coating solution containing the organic powder and/or the inorganic powder and a heat-resistant resin is applied on at least one surface of a porous film to form a heat-resistant resin layer, but the latter method is preferable in view of productivity. Examples of the method in which a coating solution containing the organic powder and/or the inorganic powder and a heat-resistant resin is applied on at last one surface of a porous film to form a heat-resistant resin layer include a method including the following steps of:
(a) preparing a slurry-like coating solution in which the organic powder and/or the inorganic powder is dispersed in a polar organic solvent solution containing 100 parts by weight of a heat-resistant resin in an amount of 1 to 1,500 parts by weight based on 100 parts by weight of the heat-resistant resin;
(b) applying the coating solution on at least one surface of the porous film to form a coating film; and
(c) precipitating the heat-resistant resin from the coating film by means such as humidification, removal of the solvent or immersion in a solvent which does not dissolve the heat-resistant resin, followed by optional drying.

It is preferred that the coating solution be continuously applied by the coating apparatus described in Japanese Unexamined Patent Publication (Kokai) No. 2001-316006 and the method described in Japanese Unexamined Patent Publication (Kokai) No. 2001-23602.

The laminated porous film of the present invention is used as a separator for a battery, and can cause shutdown at a low temperature when the temperature exceeds a usual working temperature, is excellent in thermal film breakage resistance even after the shutdown, and is suited for use in a separator for a nonaqueous electrolyte secondary battery.

The nonaqueous electrolyte secondary battery having a separator in the present invention will now be described by way of a lithium secondary battery as an example of the battery.

As the lithium secondary battery, for example, a known technique as disclosed in Japanese Unexamined Patent Publication (Kokai) No. 2002-054394 can be used. For example, a cathode sheet obtained by applying an electrode mixture for a cathode on a cathode current collector, an anode sheet obtained by applying an electrode mixture for an anode on an anode current collector and a separator in the present invention are laminated and wound around to obtain an electrode group, and then the electrode group is encased in a battery can and impregnated with an electrolytic solution containing an electrolyte and a nonaqueous organic solvent, and thus a nonaqueous electrolyte secondary battery is prepared.

Examples of the shape of the electrode group include the shape in which a cross section of the electrode group cut in the direction vertical to a winding-on axis has a circular, oval, rectangular or chamfered rectangular shape. Examples of the shape of the battery include paper, coin, cylinder and square.

As the cathode sheet, those obtained by applying an electrode mixture for a cathode, which contains a cathode active material, a conductive material and a binder, on a cathode current collector are usually used. The electrode mixture for a cathode preferably contains a material which can be doped or dedoped with lithium ions as a cathode active material, a carbonaceous material as a conductive material, and also a thermoplastic resin as a binder.

Specifically, examples of the cathode active material include a composite metal oxide containing at least one transition metal element selected from V, Mn, Fe, Co, Ni, Cr and Ti, and an alkali metal element such as Li or Na, and is preferably a composite oxide containing an α-NaFeO₂ type structure as a matrix, and more preferably a composite oxide such as lithium cobaltate, lithium nickelate, or lithium nickelate in which a portion of nickel is substituted with another element such as Mn or Co in view of a high average discharge potential. Also, a composite oxide containing a spinel type structure such as lithium manganese spinel as a matrix is exemplified.

Examples of the binder include thermoplastic resins, for example, polyvinylidene fluoride, a copolymer of vinylidene fluoride, polytetrafluoroethylene, a copolymer of tetrafluoroethylene-hexafluoropropylene, a copolymer of tetrafluoroethylene-perfluoroalkyl vinyl ether, a copolymer of ethylene-tetrafluoroethylene, a vinylidene fluoride-hexafluoropropylene-tetrafluoroethylene copolymer, a thermoplastic polyimide, carboxymethyl cellulose, polyethylene and polypropylene.

Examples of the conductive material include carbonaceous materials, for example, natural graphite, artificial graphite, cokes and carbon black. Two or more kinds of them may be used in combination.

Examples of the material of the cathode current collector include Al and stainless steel, and is preferably Al in view of light weight, low cost and ease of working.

Examples of the method of applying the electrode mixture for a cathode on the cathode current collector include a method using a press forming, and a method in which a paste of the electrode mixture for a cathode is prepared using a solvent or the like and applied on a cathode current collector, followed by drying and further contact bonding through pressing.

As the material of the anode sheet, for example, those obtained by applying an electrode mixture for a cathode containing materials which can be doped or dedoped with lithium ions on a current collector, or lithium metal or a lithium alloy can be used. Specific examples of materials which can be doped or dedoped with lithium ions include carbonaceous materials such as natural graphite, artificial graphite, cokes, carbon black, pyrolytic carbons, carbon fiber and a fired organic polymer compound, and it is also possible to use chalcogen compounds such as oxides and sulfides, which can be doped or dedoped with lithium ions at a lower potential than that of the cathode. The carbonaceous material is preferably a carbonaceous material containing graphite, such as natural graphite or artificial graphite, as a main component in view of high potential smoothness and low average discharge potential. The shape of the carbonaceous material may be any of a thin scaly material such as natural graphite, a spherical material such as mesocarbon microbeads, a fibrous material such as graphitized carbon fiber, and an aggregate of fine powders.

It is preferable to use an electrode mixture for an anode which contains polyethylene carbonate when the electrolytic solution does not contain ethylene carbonate described hereinafter, since cycle characteristics and large current discharge characteristics of the resulting battery may be improved.

The electrode mixture for an anode may optionally contain a binder. Examples of the binder include a thermoplastic resin, and specific examples thereof include polyvinylidene fluoride, a copolymer of polyvinylidene fluoride, a copolymer of vinylidene fluoride-hexafluoropropylene-tetrafluoroethylene, a thermoplastic polyimide, carboxymethyl cellulose, polyethylene and polypropylene.

Examples of the chalcogen compounds such as oxides and sulfides used as materials which can be doped or dedoped with lithium ions contained in an electrode mixture for an anode include chalcogen compounds such as crystalline or amorphous oxides and sulfides composed mainly of Group 13, 14 and 15 elements of the Periodic Table, and specific examples thereof include amorphous compounds composed mainly of tin oxide. If necessary, carbonaceous materials as the conductive material and thermoplastic resins as the binder can be added thereto.

The material of the anode current collector used as the anode sheet include Cu, Ni and stainless steel, and is preferably Cu since it does not easily form an alloy with lithium and can be easily formed into a thin film. The method of applying an electrode mixture for an anode to the anode current collector is similar to the case of the cathode and examples thereof include a method using a press forming, and a method in which a paste is prepared using a solvent or the like and applied on a current collector, followed by drying and further contact bonding through pressing.

As the electrolytic solution, for example, an electrolytic solution prepared by dissolving a lithium salt in an organic solvent can be used. Examples of the lithium salt include LiClO_{4,}, LiPF₆, LiAsF₆, LiSbF₆, LIBF₄, LiCF₃SO₃, LiN(SO₂CF₃)₂, LiC(SO₂CF₃)₃, Li₂B₁₀Cl₁₀, lower aliphatic lithium carboxylate and LiAlCl₄, and a mixture of two or more kinds of them may be used. It is preferred to use, as the lithium salt, those containing at least one selected from the group consisting of LiPF₆, LiAsF₆, LiSbF₆, LiBF₄, LiCF₃SO₃, LiN(SO₂CF₃)₂ and LiC(SO₂CF₃)₃ each containing fluorine.

Examples of the organic solvent used in the electrolytic solution include carbonates such as propylene carbonate, ethylene carbonate, vinylene carbonate, dimethyl carbonate, diethyl carbonate, ethylmethyl carbonate, 4-trifluoromethyl-1,3-dioxolan-2-one and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran and 2-methyltetrahydrofuran; esters such as methyl formate, methyl acetate and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide and 1,3-propanesultone; and a compound in which a fluorine substituent is introduced into the above organic solvents, and two or more kinds of them may be used in combination. Among these, a mixed solvent containing carbonates is preferred, and a mixed solvent of a cyclic carbonate and a noncyclic carbonate or a mixed solvent of a cyclic carbonate and ethers is more preferred. The mixed solvent of the cyclic carbonate and the noncyclic carbonate is preferably a mixed solvent containing ethylene carbonate, dimethyl carbonate and ethylmethyl carbonate in view of wide operation temperature range, excellent loading characteristics, and high decomposition resistance when graphite materials such as natural graphite and artificial graphite are used as materials which can be doped or dedoped with lithium ions contained in an electrode mixture for an anode. Examples of the cyclic carbonate include ethylene carbonate, and examples of the noncyclic carbonate include dimethyl carbonate and ethylmethyl carbonate.

### EXAMPLES

### (1) Composition Analysis of Solid Sample of Solid Catalyst Component, etc.

The content of a titanium atom was determined by the following procedure. That is, about 20 mg of a solid sample was decomposed by 47 mL of 0.5 mol/L sulfuric acid and 3 mL of 3 wt% hydrogen peroxide water was added in an excess amount. Then, characteristic absorption at 410 nm of the resulting liquid sample was measured using a double beam spectrophotometer, Model U-2001 manufactured by Hitachi, Ltd. and the content of the titanium atom was determined by a calibration curve made separately. The content of an alkoxy group was determined by the following procedure. About 2 g of a solid sample was decomposed by 100 mL of water and the amount of an alcohol corresponding to the alkoxy group in the resulting liquid sample was determined by the gas chromatography internal standard method, and then calculated in terms of the content of an alkoxy group. The content of a phthalate ester compound was determined by the following procedure. About 30 mg of a solid sample was dissolved in 100 mL of N,N-dimethylacetamide and the amount of a phthalate ester compound in the solution was determined by the gas chromatography internal standard method.

### (2) BET Specific Surface Area

The specific surface area of a solid catalyst component was determined by the BET method according to an adsorption/desorption amount of nitrogen using FlowSorb II 2300 manufactured by Micromeritics.

### (3) Short Chain Branch Number (SCB) per 1,000 Carbon Atoms in Ethylene-α-Olefin Copolymer

In accordance with the method described in "Polymer Analysis Handbook" (The Japan Society for Analytical Chemistry, edited by Research Committee of Polymer Analysis) pp. 590-594, a calibration curve was determined by characteristic absorptions of ethylene and α-olefin using an infrared spectrophotometer (1600 Series, manufactured by PerkinElmer Co., Ltd.) and then the short chain branch number (SCB) per 1,000 carbon atoms in an ethylene-α-olefin copolymer was obtained.

### (4) Bulk Specific Gravity of Polymer Powder

The bulk specific gravity of the polymer powder was measured in accordance with JIS K-6721 (1966).

### (5) Intrinsic Viscosity [η] of Ethylene-α-Olefin Copolymer

A polymer was dissolved in a Tetralin solvent at 135°C and an intrinsic viscosity was measured at 135°C using an Ubbelohde type viscometer.

### (6) Amount of CXS in Ethylene-α-Olefin Copolymer

5 g of a polymer was dissolved in 1,000 mL of boiled xylene, air-cooled and then allowed to stand in a constant temperature bath at 25°C for 20 hours, and then the polymer precipitated at the same temperature was separated by filtration using a filter paper (No. 50, manufactured by Advantech Co., Ltd.).

Xylene in the filtrate was distilled off under reduced pressure and the weight of the remaining polymer was measured and a weight percentage of the polymer in an initial weight (5 g) was determined as CXS (unit = %).

### (7) Melting Point

In accordance with ASTM D3417, the measurement was carried out using a differential scanning calorimeter (Diamond DSC, manufactured by PerkinElmer Co., Ltd.). A sample in a measuring pan was maintained at 150°C for 5 minutes, cooled from 150°C to 20°C at a cooling rate of 5°C /minute, maintained at 20°C for 2 minutes and then heated from 20°C to 150°C at a heating rate of 5°C /minute. A peak top temperature of the melting curve thus obtained was taken as a melting point (Tm (°C)). When plural peaks exist in the melting curve, a peak temperature at which heat of fusion ΔH (J/g) is the largest was taken as a melting point (Tm (°C)).

### (8) Average Particle Diameter of Inorganic Filler

Using a scanning electron microscope SEM (S-4200, manufactured by Hitachi, Ltd.), diameters of 100 particles were measured at a magnification of 30,000 and an average was taken as an average particle diameter (µm).

### (9) Gurley Value

A Gurley value (seconds/100 cc) of a film was measured by a B type Densometer (manufactured by Toyo Seiki Seisaku-Sho, Ltd.) in accordance with JIS P8117.

### (10) Average Pore Diameter

In accordance with ASTM F316-86, an average pore diameter d (µm) of a porous film was measured by the bubble point method using a Perm-Porometer (manufactured by PMI).

### (11) Film Thickness

A film thickness was measured in accordance with JIS K7130.

### (12) Puncture Strength

A porous film was fixed with a 12 mmφ washer and a maximum stress (gf) when a pin was punctured at 200 mm/min was taken as a puncture strength of the film. A pin having a pin diameter of 1 mmφ and a tip radius of 0.5 R was used.

### (13) Measurement of Internal Resistance

Using a cell for measuring shutdown (hereinafter referred to as a cell) as shown in Fig. 1, a shutdown temperature was measured.

A separator (8) measuring 6 cm square was disposed on an SUS plate electrode (10) and vacuum-impregnated with an electrolytic solution (9), and an electrode (13) equipped with a spring (12) was placed on the separator (8) so that the spring faces upward. On a spacer (11) disposed on the electrode (10), another SUS plate electrode (10) was placed and then both electrodes (10), (10) were fastened via the spring (12) and the electrode (13) so as to apply a surface pressure of 1 kgf/cm² on the separator (8), thereby assembling a cell. As the electrolytic solution (9), a solution prepared by dissolving 1 mol/L of LiPF₆ in a mixed solution of 30 vol% of ethylene carbonate, 35 vol% of dimethyl carbonate and 35 vol% of ethylmethyl carbonate was used.

After connecting a terminal of an impedance analyzer (7) to both electrodes (10), (10) of the assembled cell, a resistance value at 1 kHz was measured. It was made possible to measure a temperature by attaching a thermocouple (14) right under the separator. While heating at a temperature rising rate of 2°C /minute, the impedance and temperature were measured. The temperature at which the impedance at 1 kHz reached 1,000 Ω was taken as a shutdown temperature (SD temperature). After shutdown, the temperature was further raised and the measured temperature at which the laminated porous film was broken and the internal resistance began to lower was defined as the thermal film breakage temperature.

### (14) Weight Average Molecular Weight

As a measuring apparatus, Gel Chromatograph Alliance, Model GPC2000, manufactured by Waters was used. Other conditions are shown below.
Column: TSKgel GMHHR-H(S)HT 30 cm × 2, TSKgel GMH6-HTL 30 cm × 2, manufactured by TOSOH Corporation
Mobile phase: o-dichlorobenzene
Detector: Differential refractometer
Flow rate: 1.0 mL/minute
Column temperature: 140°C
Injection amount: 500 µL

After completely dissolving 30 mg of a sample in 20 mL of o-dichlorobenzene at 145°C, the solution was filtered through a sintered filter having a pore diameter of 0.45 µm and the filtrate was used as a feed solution.

### [Production Example 1]

### (1) Synthesis of Solid Catalyst Component Precursor

In a 200 L reactor equipped with a nitrogen-substituted stirrer and a baffle plate, 80 L of hexane, 20.6 kg of tetraethoxysilane and 2.2 kg of tetrabutoxytitanium were charged, followed by stirring. To the stirred mixture, 50 L of a dibutylether solution (concentration: 2.1 mol/L) of butylmagnesium chloride was added dropwise over 4 hours while maintaining the temperature of the reactor at 5°C. After completion of the dropwise addition and stirring at 5°C for 1 hour and further stirring at 20°C for 1 hour, the solution was filtered and the resulting solid was repeatedly washed three times with 70 L of toluene, and 63 L of toluene was added to obtain a slurry. A portion of the slurry was collected and the solvent was removed and the slurry was then dried to obtain a solid catalyst component precursor.

The solid catalyst component precursor contained 1.86% by weight of Ti, 36.1% by weight of OEt (ethoxy group) and 3.00% by weight of OBu (butoxy group).

### (2) Synthesis of Solid Catalyst Component

After substituting the atmosphere in a reactor having an inner volume of 210 L equipped with a stirrer with nitrogen, the solid catalyst component precursor slurry synthesized in (1) was charged in the reactor and 14.4 kg of tetrachlorosilane and 9.5 kg of di(2-ethylhexyl) phthalate were charged, followed by stirring at 105°C for 2 hours. After solid-liquid separation, the resulting solid was repeatedly washed three times with 90 L of toluene at 95°C, and 63 L of toluene was added. After heating to 70°C, 13.0 kg of TiCl₄ was charged, followed by stirring at 105°C for 2 hours. After solid-liquid separation, the resulting solid was repeatedly washed six times with 90 L of toluene at 95°C, repeatedly washed twice with 90 L of hexane at room temperature and then the washed solid was dried to obtain 15.2 kg of a solid catalyst component.

The solid catalyst component contained 0.93% by weight of Ti and 26.8% by weight of di(2-ethylhexyl) phthalate. A specific surface area as measured by the BET method was 8.5 m²/g.

### [Production Example 2]

### (1) Synthesis of Para-aramid Solution

Using a 5 L separable flask equipped with a stirring blade, a thermometer, a nitrogen introduction tube and a powder inlet, synthesis of poly(paraphenyleneterephthalamide) (hereinafter abbreviated as PPTA) was carried out. The flask was sufficiently dried, 4200 g of NMP was charged thereto, 272.65 g of calcium carbonate dried at 200°C for two hours was added thereto, and the flask was heated to 100°C. After calcium carbonate was completely dissolved, the temperature was returned to room temperature and 132.91 g of paraphenylenediamine (hereinafter abbreviated as PPD) was added thereto and completely dissolved. While the solution was kept at 20 ± 2°C, 243.32 g of terephthalic acid dichloride (hereinafter abbreviated as TPC) was added in ten portions at about every 5 minutes. Thereafter, while keeping the solution at 20 ± 2°C, the solution was aged for 1 hour and stirred under reduced pressure for 30 minutes in order to remove bubbles. The obtained polymer solution showed optical anisotropy. A portion of the solution was sampled and reprecipitated with water to give a polymer. The intrinsic viscosity of the obtaioned PPTA was measured to be 1.97 dl/g. Then, 100 g of the polymer solution was weighed and put in a separable flask equipped with a stirring blade, a thermometer, a nitrogen introduction tube and a liquid inlet, and the NMP solution was gradually added thereto. Finally, a PPTA solution with a PPTA concentration of 2.0% by weight was preparea and regarded as a solution P.

### [Example 1]

### (1) Ethylene/Butene Slurry Polymerization

After an autoclave (having an inner volume of 200 L) equipped with a stirrer was sufficiently dried and evacuated, 70 L of hexane and 20 kg of 1-butene were charged and then heated to 70°C. Then, ethylene was added so as to attain a partial pressure of 1.1 MPa. 315 mmol of triethylaluminum and 1.9 g of the solid catalyst component obtained in Production Example 1(2) were pressed into the autoclave using argon and then polymerization was initiated. The polymerization was carried out while continuously feeding ethylene under the total pressure maintained at 1.5 MPa at 70°C for 2.5 hours.

After completion of the polymerization, the reaction product was contacted with 3 L of isobutanol and the ethylene-1-butene copolymer and the remaining solvent were subjected to solid-liquid separation to obtain 13.2 kg of an ethylene-1-butene copolymer. The polymer powder had a bulk specific gravity of 0.44 g/ml. The intrinsic viscosity [η] of the obtained ethylene-1-butene copolymer was 10.0 (dl/g), the SCB was 10.0 (number/1,000 carbon atoms), the CXS was 1.43 (wt%), and the melting point was 117.8 (°C).

### (2) Preparation of Porous Film

100 parts by weight of a mixture obtained by mixing 100 parts by weight of the ethylene-1-butene copolymer (A) ([η] = 10.0, melting point: 117.8°C, CXS: 1.43% by weight, SCB: 10.0/1,000 carbon atoms) obtained by the above method with 42.8 parts by weight of a low molecular weight polyethylene (B) (weight average molecular weight: 1,000, Highwax 110P manufactured by Mitsui Chemicals, Inc.) and 234 parts by weight of calcium carbonate (C) having an average particle diameter of 0.1 µm (100 parts by weight of the total of the components (A), (B) and (C)) was kneaded with 0.35 parts by weight of a phenol-based antioxidant (manufactured by Ciba Specialty Chemicals: IRGANOX 1010) and 0.1 parts by weight of a phosphorus-based antioxidant (IRGAFOS 168 manufactured by Ciba Specialty Chemicals) using a Labo Plastomill (manufactured by Toyo Seiki Seisaku-Sho, Ltd.) (200°C, 3 minutes, rotating speed: 100 rpm) to obtain a polyolefin-based resin composition. The polyolefin-based resin composition was rolled using a press (210°C) to obtain a 100 µm thick sheet. The sheet was immersed in an aqueous acid solution (containing a surfactant) thereby extracting calcium carbonate, washed with water, dried at 40°C and then drawn at a draw ratio of 5.8 times at 95°C using an autograph to obtain a porous film (1).

### (3) Production of Laminated Porous Film

Using the porous film (1) and the solution P obtained in Production Example 2, the solution P was applied to the porous film placed on a glass plate with a bar coater (gap: 200 µm) manufactured by Tester Sangyo Co., Ltd. The plate was maintained for about 20 minutes in a draft in a laboratory to precipitate PPTA and give a white turbid film-like product on the porous film. The porous film on which the film-like product is attached was immersed in ionexchange water, separated from the glass plate 5 minutes later, sufficiently washed with water while flowing ionexchange water, and the free water was wiped off. The porous film on which the film-like product is attached was sandwiched by nylon cloth and further by felt made from an aramid. While the porous film on which the film-like product is attached was sandwiched by nylon cloth and felt made from an aramid, an aluminum plate was placed thereon and a nylon film was laminated thereon. The nylon film and the aluminum plate were sealed with a gum and a pipe for pressure reduction was attached to the laminate. The whole laminate was placed in a heating oven and dried at 60°C while reducing the pressure to give a laminated porous film (1) in which an aramid is laminated as a heat-resistant resin. Physical properties (film thickness, shutdown temperature, thermal film breakage temperature, puncture strength) of the resulting laminated porous film (1) are shown in Table 1.

### [Example 2]

### (1) Ethylene/Butene Slurry Polymerization

After an autoclave (having an inner volume of 200 L) equipped with a stirrer was sufficiently dried and evacuated, 85 L of hexane and 15 kg of 1-butene were charged and then heated to 70°C. Then, ethylene was added so as to attain a partial pressure of 1.2 MPa. 315 mmol of triethylaluminum and 2.1 g of the solid catalyst component obtained in Production Example 1(2) were pressed into the autoclave using argon and then polymerization was initiated. The polymerization was carried out while continuously feeding ethylene under the total pressure maintained at 1.5 MPa at 70°C for 3.0 hours.

After completion of the polymerization, the reaction product was contacted with 3 L of isobutanol and the ethylene-1-butene copolymer and the remaining solvent were subjected to solid-liquid separation to obtain 18.0 kg of an ethylene-1-butene copolymer. The polymer powder had a bulk specific gravity of 0.44 g/ml. The intrinsic viscosity [η] of the obtained ethylene-1-butene copolymer was 10.7 (dl/g), the SCB was 6.9 (number/1,000 carbon atoms), the CXS was 2.05 (wt%), and the melting point was 119.2 (°C).

### (2) Preparation of Porous Film

100 parts by weight of a mixture obtained by mixing 100 parts by weight of the ethylene-1-butene copolymer (A) ([η] = 10.7, melting point: 119.2°C, CXS: 2.05% by weight, SCB: 6.9/1,000 carbon atoms) obtained by the above method with 42.8 parts by weight of a low molecular weight polyethylene (B) (weight average molecular weight: 1,000, Highwax 110P manufactured by Mitsui Chemicals, Inc.) and 234 parts by weight of calcium carbonate (C) having an average particle diameter of 0.1 µm (100 parts by weight of the total of the components (A), (B) and (C)) was kneaded with 0.35 parts by weight of a phenol-based antioxidant (manufactured by Ciba Specialty Chemicals: IRGANOX 1010) and 0.1 parts by weight of a phosphorus-based antioxidant (IRGAFOS 168 manufactured by Ciba Specialty Chemicals) using a Labo Plastomill (manufactured by Toyo Seiki Seisaku-Sho, Ltd.) (200°C, 3 minutes, rotating speed: 100 rpm) to obtain a polyolefin-based resin composition. The polyolefin-based resin composition was rolled using a press (210°C) to obtain a 100 µm thick sheet. The sheet was immersed in an aqueous acid solution (containing a surfactant) thereby extracting calcium carbonate, washed with water, dried at 40°C and then drawn at a draw ratio of 5.8 times at 95°C using an autograph to obtain a porous film (2).

### (3) Production of Laminated Porous Film

In the same manner as in Example 1 except that the porous film (2) and the solution P obtained in Production Example 2 were used, a laminated porous film (2) was obtained. Physical properties (film thickness, shutdown temperature, thermal film breakage temperature, puncture strength) of the resulting laminated porous film (2) are shown in Table 1.

### [Comparative Example 1]

The film thickness, shutdown temperature, thermal film breakage temperature and puncture strength of the porous film (1) used to produce the laminated porous film (1) in Example 1 were measured. The results are shown in Table 1.

### [Comparative Example 2]

The film thickness, shutdown temperature, thermal film breakage temperature and puncture strength of the porous film (2) used to produce the laminated porous film (2) in Example 2 were measured. The results are shown in Table 1.

**Table 1**

| | Physical properties of film | | | |
|---|---|---|---|---|
| | Film thickness | SD temperature | Thermal film breakage temperature | Puncture strength |
| | µm | **°C** | °C | (gf) N |
| Example 1 | 21 | 116 | Not broken at 172°C | (274) 2,687 |
| Example 2 | 26 | 115 | Not broken at 169°C | (323) 3,167 |
| Comparative Example 1 | 20 | 106 | 150 | (308) 3,020 |
| Comparative Example 2 | 22 | 119 | 147 | (348) 3,413 |

## Claims

1. A laminated porous film formed by laminating a heat-resistant resin layer on a porous film made from a polyolefin-based resin containing an ethylene-α-olefin copolymer comprising a structural unit derived from ethylene and a structural unit derived from one or more kinds of monomers selected from α-olefins having 4 to 10 carbon atoms,
wherein an intrinsic viscosity [η] of the ethylene-α-olefin copolymer is 9.1 dl/g or more and 15.0 dl/g or less a short chain branch number (SCB) per 1,000 carbon atoms in the copolymer is 4.8 or more and 20.0 or less and
a heat-resistant resin constituting the heat-resistant resin layer is a polymer containing a nitrogen atom.

2. The laminated porous film according to claim 1, wherein a cold xylene soluble portion (CXS) contained in the ethylene-α-olefin copolymer is 1.2 or more and 6.0 or less.

3. The laminated porous film according to claim 1 or 2, wherein the polyolefin-based resin is a polyolefin-based resin containing 100 parts by weight of the ethylene-α-olefin copolymer and 5 to 200 parts by weight of a low molecular weight polyolefin having a weight average molecular weight of 10,000 or less.

4. The laminated porous film according to any one of claims 1 to 3, wherein the heat-resistant resin layer is a layer in which a coating solution containing an organic powder and/or an inorganic powder and a heat-resistant resin is applied on at least one surface of a porous film.

5. A separator for a nonaqueous electrolyte secondary battery, comprising the laminated porous film according to any one of claims 1 to 4.

6. A nonaqueous electrolyte secondary battery comprising the separator, for a nonaqueous electrolyte secondary battery according to claim 5.

## Patentansprüche

1. Laminierte poröse Folie, die ausgebildet ist durch Laminierten einer hitzeresistenten Harzschicht auf eine poröse Folie, die aus einem polyolefin-basierten Harz hergestellt ist, welches ein Ethylen-α-Olefin-Copolymer enthält, welches eine Struktureinheit, die von Ethylen abgeleitet ist, und eine Struktureinheit aufweist, die von einem oder mehreren Arten von Monomeren abgeleitet ist, welche unter α-Olefinen mit 4 bis 10 Kohlenstoffatomen gewählt sind,
wobei die intrinsische Viskosität [η] des Ethylen-α-Olefin-Copolymers 9,1 dl/g oder mehr und 15,0 dl/g oder weniger beträgt, eine Anzahl kurzer Verzweigungsketten (SCB) pro 1.000 Kohlenstoffatomen in dem Copolymer 4,8 oder mehr und 20,0 oder weniger beträgt und
ein hitzeresistentes Harz, das die hitzeresistente Harzschicht bildet, ein Polymer ist, das ein Stickstoffatom enthält.

2. Laminierte poröse Folie nach Anspruch 1, wobei ein Anteil kaltlöslichen Xylols (CXS), welcher in dem Ethylen-α-Olefin-Copolymer enthalten ist, 1,2 oder mehr und 6,0 oder weniger beträgt.

3. Laminierte poröse Folie nach Anspruch 1 oder 2, wobei das polyolefin-basierte Harz ein polyolefin-basiertes Harz ist, das 100 Gewichtsteile des Ethylen-α-Olefin-Copolymers und 5 bis 200 Gewichtsteile eines Polyolefins mit niedrigem Molekulargewicht und einem durchschnittlichen Molekulargewicht von 10.000 oder weniger enthält.

4. Laminierte poröse Folie nach einem der Ansprüche 1 bis 3, wobei die hitzeresistente Harzschicht eine Harzschicht ist, bei welcher eine Beschichtungslösung, welche ein organisches Pulver und/oder ein anorganisches Pulver enthält, und ein hitzebeständiges Harz auf wenigstens eine Oberfläche einer porösen Folge aufgetragen sind.

5. Separator für eine Sekundärbatterie mit nicht wässrigem Elektrolyt, umfassend die laminierte poröse Folie nach einem der Ansprüche 1 bis 4.

6. Sekundärbatterie mit nicht wässrigem Elektrolyt, umfassend den Separator für eine Sekundärbatterie mit nicht wässrigem Elektrolyt nach Anspruch 5.

## Revendications

1. Film poreux stratifié formé par stratification d'une couche de résine thermorésistante sur un film poreux constitué d'une résine à base de polyoléfine contenant un copolymère d'éthylène-oléfine-α comprenant une unité de structure dérivée de l'éthylène et une unité de structure dérivée d'un ou plusieurs types de monomères choisis parmi des oléfines-α ayant de 4 à 10 atomes de carbone,
dans lequel une viscosité intrinsèque [η] du copolymère d'éthylène-oléfine-α est de 9,1 dl/g ou supérieure et de 15,0 dl/g ou inférieure et un nombre de ramification de chaîne courte (SCB) pour 1 000 atomes de carbone dans le copolymère est de 4,8 ou supérieur et de 20,0 ou inférieur et
une résine thermorésistante constituant la couche de résine thermorésistante est un polymère contenant un atome d'azote.

2. Film poreux stratifié selon la revendication 1, dans lequel une portion soluble dans du xylène froid (CXS) contenue dans le copolymère d'éthylène-oléfine-α est de 1,2 ou supérieure et de 6,0 ou inférieure.

3. Film poreux stratifié selon la revendication 1 ou 2, dans lequel la résine à base de polyoléfine est une résine à base de polyoléfine contenant 100 parties en masse du copolymère d'éthylène-oléfine-α et de 5 à 200 parties en masse d'une polyoléfine de faible masse moléculaire ayant une masse moléculaire moyenne en masse de 10 000 ou inférieure.

4. Film poreux stratifié selon l'une quelconque des revendications 1 à 3, dans lequel la couche de résine thermorésistante est une couche dans laquelle une solution de revêtement contenant une poudre organique et/ou une poudre inorganique et une résine thermorésistante est appliquée sur au moins une surface d'un film poreux.

5. Séparateur pour un accumulateur secondaire à électrolyte non aqueux, comprenant le film poreux stratifié selon l'une quelconque des revendications 1 à 4.

6. Accumulateur secondaire à électrolyte non aqueux comprenant le séparateur pour un accumulateur secondaire à électrolyte non aqueux selon la revendication 5.
